# EUROPEAN PATENT SPECIFICATION

(11) **EP 2 824 826 B1**
(45) Date of publication and mention of the grant of the patent: **04.10.2017**
(21) Application number: 14173881.5
(22) Date of filing: 25.06.2014
(51) Int. Cl.: H02P 6/14, H02P 9/04

(54) **POWER GENERATION DEVICE, MOBILE OBJECT AND POWER GENERATION CONTROL METHOD**
STROMERZEUGUNGSVORRICHTUNG, MOBILES OBJEKT UND STROMERZEUGUNGSSTEUERUNGSVERFAHREN
DISPOSITIF DE GÉNÉRATION DE PUISSANCE, OBJET MOBILE ET PROCÉDÉ DE COMMANDE DE GÉNÉRATION DE PUISSANCE

(30) Priority: 08.07.2013 JP 2013142843; 14.02.2014 JP 2014026021
(43) Date of publication of application: 14.01.2015
(73) Proprietor: Yamaha Hatsudoki Kabushiki Kaisha, Iwata-shi, Shizuoka-ken 438-8501 (JP)
(72) Inventor: Masuda, Takahiro, Shizuoka-ken, 438-8501 (JP); Takahashi, Seigo, Shizuoka-ken, 438-8501 (JP)
(74) Representative: Zimmermann, Tankred Klaus

(56) References cited:
- EP-A2- 0 354 790
- EP-A2- 2 007 001
- JP-A- H 071 975
- JP-A- 2004 140 927
- JP-A- 2004 194 427
- JP-A- 2009 232 650
- JP-A- 2012 039 697
- US-A1- 2004 085 047
- US-A1- 2008 278 016

## Description

### BACKGROUND OF THE INVENTION

### Field of the Invention

The present invention relates to a power generation device using a single-phase alternating-current generator, a mobile object including the power generation device and a power generation control method using the single-phase alternating-current generator.

### Description of Related Art

An engine (an internal combustion engine) of a vehicle such as a motorcycle is controlled by an electronic control device. Electric power is supplied from a battery provided at the vehicle to the electronic control device. Further, a generator is attached to one end of a crankshaft of the engine in order to charge the battery. Thus, the generator is driven by a rotation of the crankshaft of the engine. Alternating-current power generated by the generator is converted into direct-current power by a rectifying circuit, and the battery is charged by the direct-current power.

The generator is attached to the crankshaft of the engine, so that generated power (a power generation amount) increases or decreases according to a rotation speed of the engine. If the rotation speed of the engine decreases, the generated power decreases, and if the rotation speed of the engine increases, the generated power increases. On the other hand, an amount of charge of the battery required by the electronic control device (hereinafter referred to as required power) is constant regardless of the rotation speed of the engine. Therefore, if the generator is designed such that the generated power obtained during a low-speed rotation of the engine satisfies the required power, the power generating capacity of the generator is excessive during a high-speed rotation of the engine. In this case, the rectifying circuit is opened or short-circuited such that the excessive power is inhibited from being supplied to the battery from the generator. As a result, a loss of power generation increases. On the contrary, if the generator is designed such that the generated power is close to the required power during the high-speed rotation of the engine, the power generating capacity of the generator is insufficient during the low-speed rotation of the engine. As a result, residual capacity of the battery decreases to be lower than a required level.

In JP 2004-194427 A and JP 2005-124328 A, an output control device that can control the generated power of a starter/generator is described. A three-phase synchronous generator is used as the starter/generator described in JP 2004-194427 A and JP 2005-124328 A. The starter/generator has a stator around which three-phase windings (stator coils) are wound and an outer rotor coupled to a crankshaft of an engine. Rotor angle sensors that respectively correspond to a U phase, a V phase and a W phase are provided at an outer rotor. The rotor angle sensor of each phase is constituted by a Hall IC (an integrated circuit) or a magneto resistive element, for example. Further, a magnet ring magnetized to exert magnetic action on the rotor angle sensors is fitted into the outer periphery of the outer rotor. N poles and S poles are alternately formed on a magnetized band of the magnet ring.

A full-wave rectifier constituted by six FETs (field-effect transistors) is connected to the stator coils of the starter/generator. At the time of the engine start-up, switching of the FETs of the full-wave rectifier is performed, so that the starter/generator functions as a synchronous generator and rotates the crankshaft. After the engine start-up, the outer rotor is driven by the crankshaft, so that the starter/generator functions as the synchronous generator. In this case, the alternating-current power is rectified by the FETs of the full-wave rectifier, so that the direct-current power is supplied to the battery.

In the output control device described in JP 2004-194427 A and JP 2005-124328 A, energization to the stator coil of each phase of the starter/generator with lag or advance is performed, so that the generated power is controlled. In the energization with lag and the energization with advance, the stator coils are energized with lag or advance to an extent corresponding to a predetermined electric angle from the detected signal obtained by the rotor angle sensor of each phase when the magnetic pole of a magnetized band is changed. Thus, the generated power of the starter/generator can be increased or decreased.

US 2004/085047 A1 describes a generating device including a magneto generator, wherein: an AC control voltage is applied to an armature coil of the magneto generator from a battery via an inverter to change a phase angle of the AC control voltage, thus increase/reduce an output of the magneto generator and match the output of the generator with a target value; it is determined that a characteristic, in which the output of the magneto generator increases when the phase angle of the AC control voltage is delayed, is a normal control characteristic, and a characteristic, in which the output of the magneto generator decreases when the phase angle of the AC control voltage is delayed, is a reciprocal control characteristic. It is determined whether a present control characteristic of the output of the generator relative to the phase angle of the AC control voltage is the normal control characteristic or the reciprocal control characteristic to decide, based on a determination result, a changing direction of the phase angle of the AC control voltage when the output of the generator is controlled and brought close to the target value.

### BRIEF SUMMARY OF THE INVENTION

An object of the present invention is to provide a power generation device that can control generated power without complication of structure and have a small size and a reduced cost, a mobile object including the power generation device and a power generation control method.

This object is achieved by a power generation device according to claim 1, by a mobile object according to claim 10, and by a power generation control method according to claim 11.

In the output control device of the synchronous generator described in JP 2004-194427 A and JP 2005-124328 A, however, it is necessary to provide the three rotor angle sensors that respectively correspond to the U phase, the V phase and the W phase and the magnet ring having the magnetized band, at the outer rotor of the starter/generator. Therefore, the structure of the starter/generator is complicated, and a manufacturing cost increases.
(1) According to one aspect of the present invention, a power generation device driven by an engine that includes a crank angle detector for detecting a crank angle includes a single-phase alternating-current generator provided to be rotated by a rotation of a crankshaft of the engine, a rectifier that includes a bridge connection of a plurality of switching elements and converts alternating-current power generated by the single-phase alternating-current generator into direct-current power, and an energization controller that controls energization switching timing for an armature winding of the single-phase alternating-current generator by the plurality of switching elements, wherein the energization controller controls the direct-current power obtained by the rectifier by performing retard angle control and advance angle control that respectively retard and advance the energization switching timing by the plurality of switching elements with respect to a phase of an induced voltage of the single-phase alternating-current generator based on an output signal of the crank angle detector. An upper limit value of a retard angle amount in a case in which the direct-current power obtained by the rectifier increases due to the retard angle control is set as a retard angle upper limit value, and an upper limit value of an advance angle amount in a case in which the direct-current power obtained by the rectifier decreases due to the advance angle control is set as an advance angle upper limit value, and the energization controller performs the retard angle control such that the retard angle amount with respect to the phase of the induced voltage of the single-phase alternating-current generator does not exceed the set retard angle upper limit value, and performs the advance angle control such that the advance angle amount with respect to the phase of the induced voltage of the single-phase alternating-current generator does not exceed the set advance angle upper limit value.
   In this power generation device, the alternating- current power generated by the single-phase alternating-current generator is converted into the direct-current power by the rectifier. The energization switching timing for the armature winding of the single-phase alternating-current generator by the plurality of switching elements is controlled by the energization controller. In this case, the energization controller controls the direct-current power obtained by the rectifier by performing the retard angle control and the advance angle control that respectively retard and advance the energization switching timing by the plurality of switching elements with respect to the phase of the induced voltage of the single-phase alternating-current generator based on the output signal of the crank angle detector.
   The crank angle of the engine has a certain relation with the phase of the induced voltage in the single-phase alternating-current generator rotated by the rotation of the crankshaft. Therefore, the retard angle control that retards the energization switching timing with respect to the phase of the induced voltage and the advance angle control that advances the energization switching timing with respect to the phase of the induced voltage can be performed based on the output signal of the crank angle detector. If the retard angle control is performed, the generated power of the single-phase alternating-current generator increases. On the other hand, if the advance angle control is performed, the generated power of the single-phase alternating-current generator decreases. The generated power that satisfies the required power can be generated by the retard angle control in a low-speed rotation region of the engine, and the generated power that largely exceeds the required power can be inhibited from being generated by the advance angle control in a high-speed rotation region of the engine. Therefore, the generated power that satisfies the required power from the low-speed rotation region to the high-speed rotation region of the engine can be efficiently obtained by the small-sized single-phase alternating-current generator.
   In this case, the retard angle control and the advance angle control can be performed based on the output signal of the crank angle detector included in the engine. Therefore, it is not necessary to separately provide an angle sensor for detecting a rotation angle of a rotator at the single-phase alternating-current generator. Therefore, the structure of the power generation device is not complicated, and the size and the cost of the power generation device can be reduced.
   If the retard angle amount retarded by the retard angle control exceeds the retard angle upper limit value, the generated power of the single-phase alternating-current generator decreases. Further, if the advance angle amount advanced by the advance angle control exceeds the advance angle upper limit value, the generated power of the single-phase alternating-current generator increases. Therefore, the retard angle control is performed such that the retard angle amount with respect to the phase of the induced voltage of the single-phase alternating-current generator does not exceed the retard angle upper limit value, and the advance angle control is performed such that the advance angle amount with respect to the phase of the induced voltage of the single-phase alternating-current generator does not exceed the advance angle upper limit value. Thus, the generated power of the single-phase alternating-current generator can be efficiently increased by the retard angle control, and the generated power of the single-phase alternating-current generator can be efficiently decreased by the advance angle control.
(2) The single-phase alternating-current generator may include a rotator rotated together with the crankshaft, and a plurality of magnetic poles arranged at the rotator at equal angular intervals, wherein the crank angle detector may be configured to produce a detection signal for each constant detection angle as the output signal, and a magnetic poles angle (magnetic pole-to-pole angle) between each two of the adjacent magnetic poles may be equal to the detection angle of the crank angle detector, the magnetic poles angle may be a divisor of the detection angle or the magnetic poles angle may be a multiple of the detection angle.
   In this case, the magnetic poles angle of the single-phase alternating-current generator is an integral multiple of the detection angle of the crank angle detector, or the detection angle by the crank angle detector is an integral multiple of the magnetic poles angle of the single-phase alternating-current generator. Thus, the phase of the induced voltage of the single-phase alternating-current generator can be easily and accurately specified from the phase of the detection signal. As a result, the retard angle control and the advance angle control using the phase of the induced voltage as a basis can be easily and accurately performed.
(3) The rotator may have an outer peripheral surface and an inner peripheral surface, the plurality of magnetic poles may be arranged on the inner peripheral surface of the rotator at equal angular intervals, the crank angle detector may include a plurality of projections and a non-projection that are arranged on the outer peripheral surface of the rotator at equal angular intervals equivalent to the detection angle, and a projection detector that detects the plurality of projections, and the projection detector may output the detection signal at a time of detecting each projection.
   In this case, the crank angle with respect to the non-projection can be detected based on the detection signal that is output at the time of the detection of each projection by the projection detector. Thus, the engine can be controlled based on the detected crank angle. Further, the phase of the induced voltage can be specified based on the detection signal that is output at the time of the detection of each projection by the projection detector. Further, because the plurality of projections are arranged on the outer peripheral surface of the rotator, the projection detector can be arranged externally of the rotator. Thus, the structure of the crank angle detector and the single-phase alternating-current generator is not complicated.
(4) The plurality of projections may be arranged such that an angular position of one edge of each projection in a rotation direction of the rotator coincides with any one angular position of boundaries between the plurality of magnetic poles, and the projection detector may output the detection signal at a time of detecting the one edge of each projection.
   In this case, the phase of the detection signal that is output by the crank angle detector coincides with the phase of the induced voltage in the single-phase alternating-current generator. Thus, the phase of the induced voltage can be accurately specified from the phase of the detection signal. As a result, the retard angle control and the advance angle control using the phase of the induced voltage as a basis can be accurately performed.
(5) The energization controller may perform the retard angle control and the advance angle control such that a direct-current voltage obtained by the rectifier is kept at a predetermined target voltage or in a target voltage range.
   In this case, the direct-current voltage obtained by the rectifier due to the retard angle control and the advance angle control is kept at the target voltage or in the target voltage range regardless of the rotation speed of the engine.
(6) The energization controller may perform the retard angle control when the direct-current voltage obtained by the rectifier is lower than the target voltage, and may perform the advance angle control when the direct-current voltage obtained by the rectifier is higher than the target voltage.
   In this case, the direct-current voltage obtained by the rectifier due to the feedback control is kept at the target voltage or in a constant voltage range that includes the target voltage in the center.
(7) The retard angle upper limit value and the advance angle upper limit value may be set in advance according to a rotation speed of the single-phase alternating-current generator, and the energization controller may calculate the rotation speed of the single-phase alternating-current generator based on the output signal of the crank angle detector, and may set the retard angle upper limit value and the advance angle upper limit value based on the calculated rotation speed.
   The retard angle upper limit value and the advance angle upper limit value change according to the rotation speed of the single-phase alternating-current generator. Therefore, the retard angle upper limit vale and the advance angle upper limit value are set in advance according to the rotation speed of the single-phase alternating-current generator, and the retard angle upper limit value and the advance angle upper limit value are set based on the rotation speed of the calculated single-phase alternating-current generator. Thus, even if the rotation speed of the engine changes, the generated power of the single-phase alternating-current generator can be efficiently increased by the retard angle control, and the generated power of the single-phase alternating-current generator can be efficiently decreased by the advance angle control.
(8) The single-phase alternating-current generator may be configured to be capable of generating predetermined required power by the retard angle control when a rotation speed of the engine is an idle rotation speed.
   With the configuration of the single-phase alternating-current generator, the size of the single-phase alternating-current generator can be decreased. In such a small-sized single-phase alternating-current generator, the power generating capacity is insufficient when the rotation speed of the engine is the idle rotation speed. In this case, the generated power can be increased to the required power by the retard angle control.
(9) The rectifier may be connected to a battery, and the battery may be charged by the direct-current power obtained by the rectifier.
   In this case, regardless of the rotation speed of the engine, the battery can be charged by the direct-current power that satisfies the required power, and an occurrence of the direct-current power that largely exceeds the required power can be prevented. Therefore, an occurrence of insufficiency of the residual capacity of the battery can be prevented, and a loss of power generation can be decreased.
(10) According to another aspect of the present invention, a mobile object includes an engine, a main body that is moved by a torque generated by the engine, a crank angle detector that detects a crank angle of the engine, an engine control device that controls the engine based on an output signal of the crank angle detector, a starting device that drives the crankshaft in order to start the engine, the power generation device according to any one of claim 1 to 10 that is driven by the engine, and a battery connected to the rectifier of the power generation device, and supplies direct-current power to the engine control device.
   In this mobile object, the crankshaft is driven by a starting device, so that the engine is started. The engine control device is driven by the battery. The engine is controlled by the engine control device based on the output signal of the crank angle detector. Thus, the main body is moved by a torque generated by the engine. The battery is charged by the direct-current power generated in the power generation device driven by the crankshaft.
   In this case, in the power generation device, the retard angle control and the advance angle control can be performed based on the output signal of the crank angle detector. Therefore, it is not necessary to separately provide an angle sensor for detecting the rotation angle of the rotator at the single-phase alternating-current generator. Further, because the starting device is separately provided from the power generation device, it is not necessary for the single-phase alternating-current generator to function as a motor to start the engine. Therefore, the size of the single-phase alternating-current generator can be decreased. Thus, the structure of the power generation device is not complicated, and the size and the cost of the power generation device can be decreased.
   The starting device may include a starter motor that operates by the power supplied from the battery. In this case, because the engine is started by the starter motor, the size of the single-phase alternating-current generator of the power generation device can be decreased.
   The starting device may include a kick starter lever. In this case, because the engine is started by the kick starter lever, the size of the single-phase alternating-current generator of the power generation device can be decreased.
(11) According to yet another aspect of the present invention, a power generation control method that controls generated power by a power generation device driven by a crankshaft of an engine, wherein the power generation device includes a single-phase alternating-current generator rotated by a rotation of the crankshaft of the engine, and a rectifier including a bridge connection of a plurality of switching elements, includes the steps of generating alternating-current power by the single-phase alternating-current generator, converting the alternating-current power generated by the single-phase alternating-current generator into direct-current power by the rectifier, detecting a crank angle by a crank angle detector, and controlling the direct-current power obtained by the rectifier by performing retard angle control and advance angle control that respectively retard and advance energization switching timing for an armature winding of the single-phase alternating-current generator by the plurality of switching elements with respect to a phase of an induced voltage of the single-phase alternating-current generator based on an output signal of the crank angle detector. An upper limit value of a retard angle amount in a case in which the direct-current power obtained by the rectifier increases due to the retard angle control is set as a retard angle upper limit value, and an upper limit value of an advance angle amount in a case in which the direct-current power obtained by the rectifier decreases due to the advance angle control is set as an advance angle upper limit value, and the step of controlling includes performing the retard angle control such that the retard angle amount with respect to the phase of the induced voltage of the single-phase alternating-current generator does not exceed the set retard angle upper limit value, and performing the advance angle control such that the advance angle amount with respect to the phase of the induced voltage of the single-phase alternating-current generator does not exceed the set advance angle upper limit value.

In the power generation control method, when the retard angle control is performed, the generated power of the single-phase alternating-current generator increases. On the other hand, when the advance angle control is performed, the generated power of the single-phase alternating-current generator decreases. The generated power that satisfies the required power can be generated by the retard angle control in the low-speed rotation region of the engine, and an occurrence of the generated power that largely exceeds the required power can be inhibited by the advance angle control in the high-speed rotation region of the engine. Therefore, the generated power that satisfies the required power from the low-speed rotation region to the high-speed rotation region of the engine can be efficiently obtained by the small-sized single-phase alternating-current generator.

In this case, the retard angle control and the advance angle control can be performed based on the output signal of the crank angle detector included in the engine. Therefore, it is not necessary to separately provide an angle sensor for detecting the rotation angle of the rotator at the single-phase alternating-current generator. Thus, the structure of the power generation device is not complicated, and the size and the cost of the power generation device can be decreased.

### BRIEF DESCRIPTION OF THE SEVERAL VIEWS OF THE DRAWING

Fig. 1 is a block diagram showing the configuration of part of a motorcycle that includes a power generation device according to one embodiment of the present invention;
Fig. 2 is a schematic diagram of the motorcycle that includes the power generation device of Fig. 1;
Fig. 3 is a circuit diagram showing the configuration of the power generation device of Fig. 1;
Fig. 4 is a schematic diagram showing the configuration of a single-phase alternating-current generator of Fig. 3;
Fig. 5 is a timing chart showing an induced voltage of the single-phase alternating-current generator, a shape of a projection, a crank pulse before shaping and a crank pulse after shaping:
   Figs. 6(a) to 6(c) are waveform diagrams for explaining magnetic field control of the single-phase alternating-current generator;
   Figs. 7(a) to 7(c) are diagrams showing the simulation results of the generated current by the magnetic field control;
   Figs. 8(a) to 8(c) are diagrams showing the simulation results of the generated current by the magnetic field control;
   Figs. 9(a) to 9(c) are diagrams showing the simulation results of the generated current by the magnetic field control;
   Fig. 10 is a diagram showing the simulation result of a battery current obtained in a case in which a rotation speed of a rotator of the single-phase alternating-current generator is changed;
   Fig. 11 is a waveform diagram for explaining a power generation control method in the power generation device of Fig. 1;
   Fig. 12 is a flow chart showing the power generation control method in the power generation device of Fig. 1;
   Fig. 13 is a flow chart showing a power generation control process of Fig. 12;
   Fig. 14 is a diagram showing a designing method of the single-phase alternating-current generator of a comparative example;
   Fig. 15 is a diagram showing the designing method of the single-phase alternating-current generator according to the present embodiment; and
   Fig. 16 is a diagram showing the power generation control method during the actual running of the power generation device according to the present embodiment.

### DESCRIPTION OF THE PREFERRED EMBODIMENTS

Hereinafter, details of an embodiment of the present invention will be described with reference to the drawings. A power generation device according to the present embodiment is used to charge a battery in a mobile object such as a motorcycle. The description has been made here of a case in which the mobile object is the motorcycle. The power generation device according to the present embodiment is not limited to a case of being provided at the mobile object as a device for charging the battery, but can be applied to various applications.

### (1) Overall Configuration of Power Generation Device

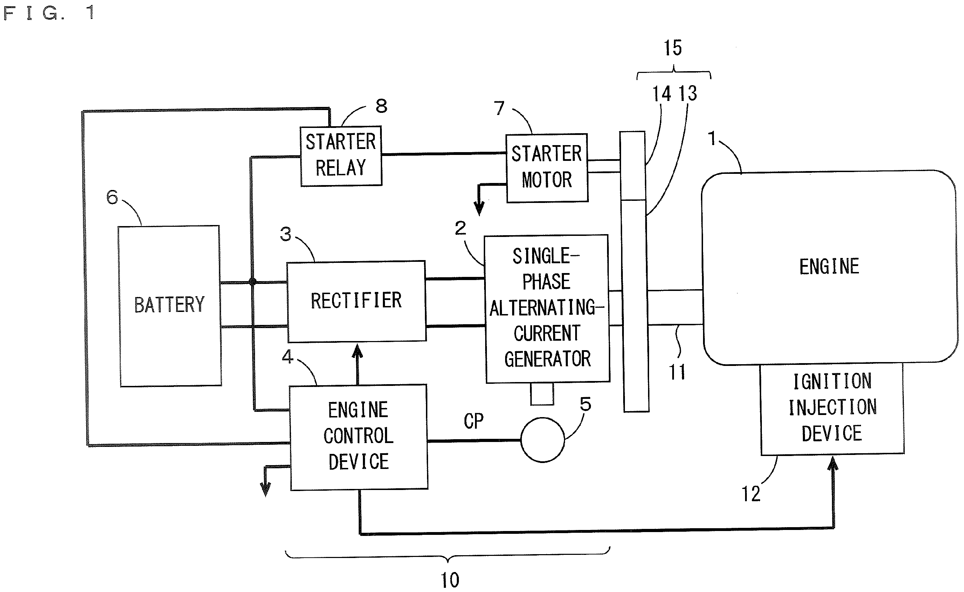

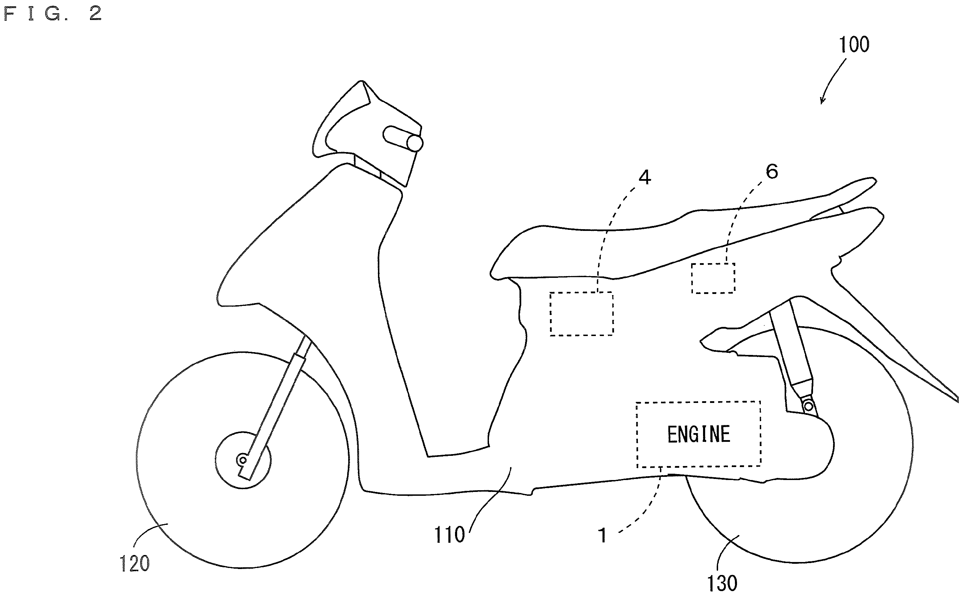

Fig. 1 is a block diagram showing the configuration of part of the motorcycle that includes the power generation device according to one embodiment of the present invention. Fig. 2 is a schematic diagram of the motorcycle that includes the power generation device of Fig. 1.

As shown in Fig. 2, a front wheel 120 is provided at a front portion of a vehicle body 110 of the motorcycle 100 to be rotatable, and a rear wheel 130 is provided at a rear portion to be rotatable. Further, an engine 1, an engine control device 4 and a battery 6 are provided at the vehicle body 110. The rear wheel 130 is driven to be rotated by a torque generated by the engine 1. The engine control device 4 is an ECU (Electronic Control Unit), for example, and is operated by the power supplied from the battery 6.

As shown in Fig. 1, a single-phase alternating-current generator 2 is attached to one end of a crankshaft 11 of the engine 1. The single-phase alternating-current generator 2 is connected to a rectifier 3. The rectifier 3 is connected to the battery 6 and the engine control device 4. The battery 6 supplies electric power to electronic equipment such as headlamps, tail lamps and the engine control device 4. A crank angle sensor 5 is arranged externally of the single-phase alternating-current generator 2. The crank angle sensor 5 is constituted by an electromagnetic pickup or an optical pickup, for example, and is fixed to a crank case. An output signal of the crank angle sensor 5 is supplied to the engine control device 4. The single-phase alternating-current generator 2, the rectifier 3, the engine control device 4 and the crank angle sensor 5 constitute the power generation device 10. The battery 6 is charged by the power generation device 10.

The engine 1 has an ignition injection device 12. The ignition injection device 12 includes an ignition plug, a fuel injection device and so on. A decelerator 15 that includes gears 13, 14 is provided at the crankshaft 11. A starter motor 7 is attached to the decelerator 15. The starter motor 7 is connected to the battery 6 via a starter relay 8. The starter relay 8 is controlled by the engine control device 4.

At the time of the start-up of the engine 1, the starter relay 8 is turned on by the control of the engine control device 4. Thus, power is supplied from the battery 6 to the starter motor 7, so that the starter motor 7 is rotated. The rotation of the starter motor 7 is transmitted to the crankshaft 11 of the engine 1 via the decelerator 15. Thus, the engine 1 is started.

After the start-up of the engine 1, the single-phase alternating-current generator 2 is driven to be rotated by the crankshaft 11. Thus, an induced voltage according to the rotation speed of the engine 1 is generated in the single-phase alternating-current generator 2.

The engine control device 4 detects a rotation position (a rotation angle from a reference position) and a rotation speed of the crankshaft 11 of the engine 1 based on an output signal of the crank angle sensor 5, and controls the ignition injection device 12 based on the detection result.

### (2) Configuration and Operation of Power Generation Device 10

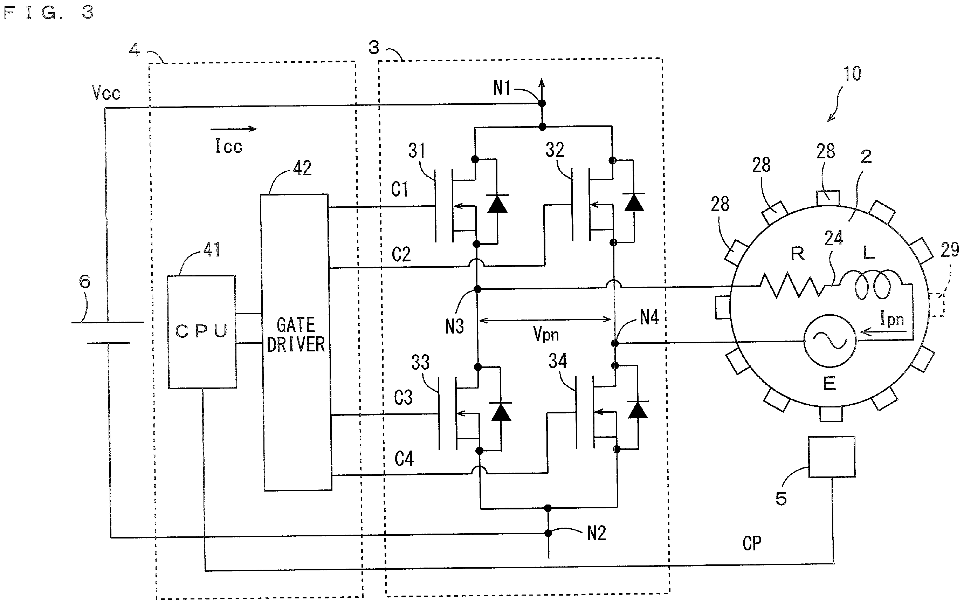

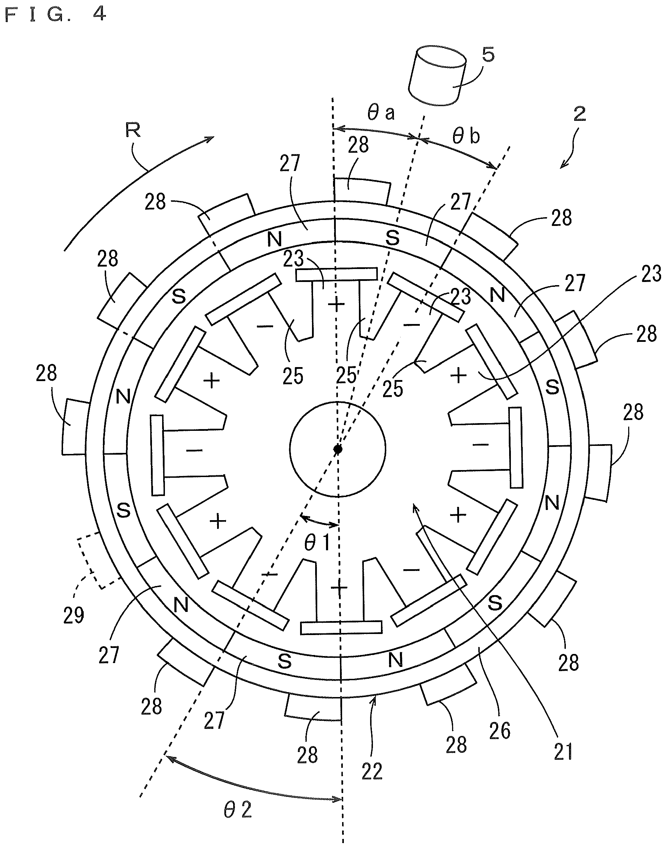

Fig. 3 is a circuit diagram showing the configuration of the power generation device 10 of Fig. 1. Fig. 4 is a schematic diagram showing the configuration of the single-phase alternating-current generator 2 of Fig. 3.

In Fig. 3, the rectifier 3 includes four FETs (Field Effect Transistors) 31 to 34 that are bridge-connected. The FET 31 is connected between a node N1 and a node N3, and the FET 32 is connected between the node N1 and a node N4. The FET 33 is connected between the node N3 and a node N2, and the FET 34 is connected between the node N4 and the node N2. The node N1 is connected to a plus terminal of the battery 6, and the node N2 is connected to a minus terminal of the battery 6. The node N3 is connected to one end of an armature winding (a stator coil) 24 of the single-phase alternating-current generator 2, and the node N4 is connected to the other end of the armature winding 24 of the single-phase alternating-current generator 2. The armature winding 24 includes an inductance component L and a resistance component R.

The engine control device 4 includes a CPU (Central Processing Unit) 41 and a gate driver 42. The CPU 41 controls the gate driver 42 based on the output signal of the crank angle sensor 5. The gate driver 42 supplies control signals C1 to C4 to gates of the FETs 31 to 34 of the rectifier 3, respectively.

When the crankshaft 11 (see Fig. 1) is rotated, the induced voltage E is generated at the armature winding 24 of the single-phase alternating-current generator 2. Thus, a phase current Ipn flows in the armature winding 24. A pair of the FETs 31, 34 and a pair of FETs 32, 33 are alternately turned on by the control signals C1 to C4 supplied from the gate driver 42. Thus, the rectifier 3 converts alternating-current power supplied from the single-phase alternating-current generator 2 into direct-current power by full-wave rectification.

The CPU 41 controls a conducting period (an ON period) and a non-conducting period (an OFF period) of the FETs 31 to 34 by controlling the control signals C1 to C4 that are supplied from the gate driver 42 to the FETs 31 to 34. Thus, energization switching timing for the armature winding 24 is controlled.

The single-phase alternating-current generator 2 of Fig. 4 is a single-phase synchronous generator. The single-phase alternating-current generator 2 includes a stator 21 and a rotator 22. The stator 21 is fixed to the crank case of the engine 1, for example. This stator 21 has a plurality of tooth portions 23 arranged in a circumferential direction to project outward. Open slots 25 are formed between the plurality of tooth portions 23. The plurality of tooth portions 23 are integrally formed. The armature winding 24 of Fig. 3 is wound around the plurality of tooth portions 23.

The rotator 22 includes a rotator body 26 and a plurality of magnetic poles 27. This rotator 22 is configured to be rotatable relative to the stator 21. The rotator body 26 is formed in a cylindrical shape having a bottom. The bottom of the rotator body 26 is fixed to the crankshaft 11 of Fig. 1. Thus, the rotator 22 is rotated together with the crankshaft 11. The plurality of magnetic poles 27 are arranged in a circumferential direction of the inner peripheral surface of the rotator body 26. The plurality of magnetic poles 27 are constituted by permanent magnets of N pole and S pole, and are fixed to the inner peripheral surface of the rotator body 26. The magnetic poles 27 of N pole and the magnetic poles 27 of S pole are alternately arranged. The number of the magnetic poles 27 is 2m. 'm' is an integer. In the present embodiment, 2m = 12.

An angular interval between each two adjacent magnetic poles 27 is θ1. The angular interval θ1 is an angular interval between the rear edge of the magnetic pole 27 of N pole and the rear edge of the magnetic pole 27 of S pole of the two adjacent magnetic poles 27, or an angular interval between the front edge of the magnetic pole 27 of N pole and the front edge of the magnetic pole 27 of S pole of the two adjacent magnetic poles 27, in the rotation direction of the rotator 22. Hereinafter, the angular interval θ1 is referred to as a magnetic poles angle (magnetic pole-to-pole angle) θ1.

A plurality of projections 28 are arranged in a circumferential direction at the outer peripheral surface of the rotator body 26 of the rotator 22. Each projection 28 is formed to project externally of the outer peripheral surface of the rotator body 26. In the present embodiment, a position from which the projection 28 is absent is present at the outer peripheral surface of the rotator body 26 as a non-projection 29. The plurality of projections 28 and the one non-projection 29 are arranged on equal intervals. The total number of the plurality of projections 28 and the non-projection 29 is 2n. 'n' is an integer. In the present embodiment, 2n=12. That is, the eleven projections 28 and the one non-projection 29 are provided.

In the present embodiment, the number 2m of the plurality of magnetic poles 27 is equal to the total number 2n of the plurality of projections 28 and the non-projection 29. The total number 2n of the plurality of projections 28 and the non-projection 29 may be an integral multiple of the number 2m of the magnetic poles 27, and the number 2m of the plurality of magnetic poles 27 may be an integral multiple of the total number 2n of the plurality of projections 28 and the non-projection 29.

An angular interval between each two of the adjacent projections 28 with the non-projection 29 not being interposed therebetween is θ2. An angular interval between each two of the adjacent projections 28 with the non-projection 29 interposed therebetween is two times of θ2. In this case, an angular interval between the adjacent projection 28 and non-projection 29 is θ2. In the rotation direction of the rotator 22, the angular interval θ2 is an angular interval between the rear edges of the two adjacent projections 28 with the non-projection 29 not being interposed therebetween, or an angular interval between the front edges of the two adjacent projections 28 with the non-projection 29 not being interposed therebetween. Hereinafter, the angular interval θ2 is referred to as a detection angle θ2.

In the present embodiment, the magnetic poles angle θ1 between each two of the adjacent magnetic poles 27 is equal to the detection angle θ2. The magnetic poles angle θ1 may be a divisor of the detection angle θ2, or the magnetic poles angle θ1 may be a multiple of the detection angle θ2.

The crank angle sensor 5 is provided outside of the rotator body 26. The crank angle sensor 5 is provided to face each of the plurality of projections 28 in accordance with the rotation of the rotator body 26. In the present embodiment, the crank angle sensor 5 is arranged such that a detection direction is directed toward the center of the open slot between each two of the adjacent tooth portions 23 of the stator 21. In this case, letting an angle formed by the central axis of the one tooth portion 23 of each two of the adjacent tooth portions 23 and the detection direction of the crank angle sensor 5 be θa, and letting an angle formed by the central axis of the other tooth portion 23 and the detection direction of the crank angle sensor 5 be θb, θa=θb.

The crank angle sensor 5 outputs a crank pulse CP as a detection signal when detecting the projection 28 on the rotating rotator body 26. In the present embodiment, the crank angle sensor 5 outputs the crank pulse CP when detecting the rear edge of each projection 28 in the rotation direction of the rotator body 26. The crank angle sensor 5 may output the crank pulse CP when detecting the front edge of each projection 28 in the rotation direction of the rotator body 26.

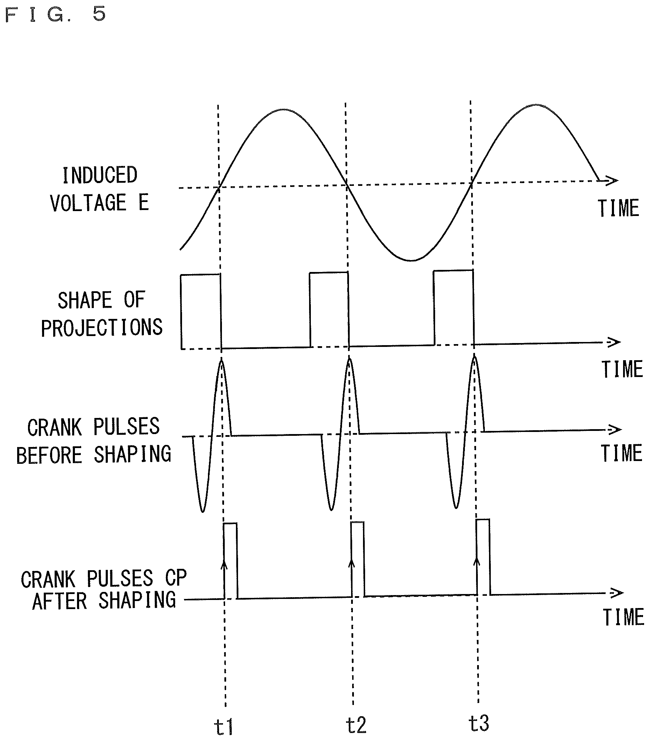

Fig. 5 is a timing chart showing the induced voltage E of the single-phase alternating-current generator 2, the shape of the projection 28, the crank pulses before shaping and the crank pulses CP after shaping. The abscissas of Fig. 5 indicate time.

In the present embodiment, the positional relation between the plurality of magnetic poles 27 and the plurality of projections 28 of the rotator 22, and the crank angle sensor 5 is set such that the rear edge of the projection 28 is detected when the induced voltage E intersects with 0 level in changing from negative to positive and changing from positive to negative. As shown in Fig. 5, at time points t1, t2, t3 at which the induced voltage E reaches 0 from negative or positive, the rear edges of the projections 28 are detected by the crank angle sensor 5, and the positive crank pulses are output. The positive crank pulses are shaped in rectangular waves. The CPU 41 of Fig. 3 determines a rising edge of each crank pulses CP after shaping as a detection time point of the rear edge of each projection 28.

The CPU 41 calculates the rotation speed of the engine 1 by calculating the time intervals of the detection time points of the rear edges of the projections 28 based on the crank pulses CP after shaping. Further, if the rotation speed of the engine 1 is constant, the time interval between the detection time points of the two projections 28 on both sides of the non-projection 29 is two times of the time interval between the detection time points of each two directly adjacent projections 28. Therefore, the CPU 41 can determine the detection time point of the rear edge of the projection 28 next to the non-projection 29 as a reference position, and can detect a rotation angle from the reference position of the crankshaft 11 as the crank angle for each output of the crank pulse CP.

The CPU 41 controls a fuel injection time point and an ignition time point by the ignition injection device 12 of Fig. 1 based on the crank angle. In the present embodiment, the crank pulses CP that are output by the crank angle sensor 5 are also used for the control of the engine 1 and the phase control of the rectifier 3 of Fig. 3. The CPU 41 responds to each crank pulse CP, and supplies the control signals C1 to C4 that instruct the time points of ON and OFF of the FETs 31 to 34 to the gates of the FETs 31 to 34 via the gate driver 42. In a power generation control method in the power generation device 10 according to the present embodiment, the below-mentioned magnetic field control is used. In this case, the magnetic field control of the single-phase alternating-current generator 2 is performed based on the crank pulses CP.

### (3) Magnetic Field Control of Single-Phase Alternating-Current Generator 2

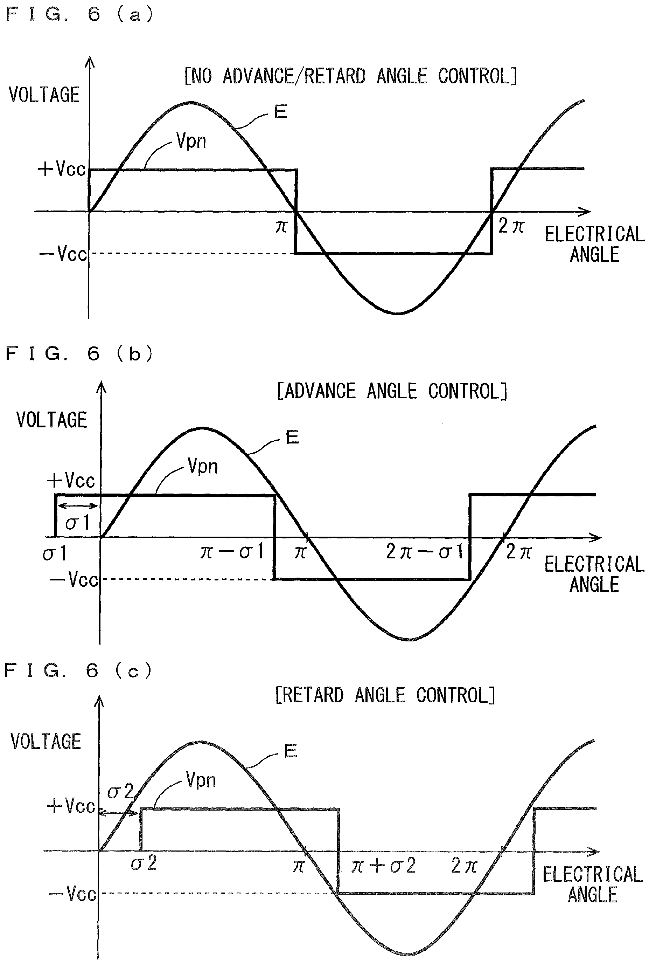

Figs. 6(a) to 6(c) are waveform diagrams for explaining the magnetic field control of the single-phase alternating-current generator 2. The ordinates of Figs. 6(a) to 6(c) indicate a voltage, and the abscissas indicate a phase shown by an electrical angle. In Figs. 6(a) to 6(c), the induced voltage E generated at the armature winding 24 of the single-phase alternating-current generator 2 and the voltage between the nodes N3, N4 of the rectifier 3 (hereinafter referred to as a rectifier voltage Vpn) are shown.

Here, the magnetic field control means controlling the generated power by the single-phase alternating-current generator 2 by changing the phase during the conducting period (the ON period) of the FETs 31 to 34 with respect to the phase of the induced voltage E. Specifically, in the magnetic field control, the phase of the switching timing between the conducting period and the non-conducting period of the FETs 31 to 34 (hereinafter referred to as an energization switching timing) is shifted with a zero crossing point (a point that intersects with the 0 level) of the induced voltage E being used as a basis. Thus, the energization switching timing for the armature winding 24 of the single-phase alternating-current generator 2 by the FETs 31 to 34 is controlled. The magnetic field control includes advance angle control and retard angle control.

Fig. 6 (a) is a diagram showing the relation between the induced voltage E and the rectifier voltage Vpn in a case in which the advance angle control and the retard angle control are not performed. Fig. 6(b) is a diagram showing the relation between the induced voltage E and the rectifier voltage Vpn in a case in which the advance angle control is performed. Fig. 6(c) is a diagram showing the relation between the induced voltage E and the rectifier voltage Vpn in a case in which the retard angle control is performed.

As shown in Figs. 6(a) to 6(c), the induced voltage E has a sine waveform. The electrical angle obtained at the zero crossing point when the induced voltage E is changed from negative to positive is 2kπ, and the electrical angle obtained at the zero crossing point when the induced voltage E is changed from positive to negative is (2k+1) π. Here, k is an integer. Here, a voltage of the battery (hereinafter referred to as a battery voltage) 6 is Vcc.

In the control in which neither the advance angle control nor the retard angle control (hereinafter referred to as no advance/retard angle control) is performed, when the electrical angle of the induced voltage E is 2kπ (k is an integer), the FETs 31, 34 of the rectifier 3 are turned on, and the FETs 32, 33 are turned off. Further, when the electrical angle of the induced voltage E is (2k+1)π, the FETs 32, 33 of the rectifier 3 are turned on, and the FETs 31, 34 are turned off. Thus, as shown in Fig. 6(a), the rectifier voltage Vpn is +Vcc in a period from an electrical angle 2kπ to an electrical angle (2k+1)π of the induced voltage E. Further, the rectifier voltage Vpn is -Vcc in a period from the electrical angle (2k+1)π to an electrical angle 2(k+1)π of the induced voltage E. In this manner, the rectifier voltage Vpn has a rectangular wave form.

The advance angle control is the control that advances the phase in the conducting period (the ON period) of the FETs 31 to 34 with respect to the phase of the induced voltage E. Specifically, in the advance angle control, the phase at the switching time point between the conducting period and the non-conducting period of the FETs 31 to 34 is advanced by an advance angle amount σ1 with respect to the zero crossing point of the induced voltage E. Thus, as shown in Fig. 6(b), the rectifier voltage Vpn is +Vcc in a period from an electrical angle 2kπ-σ1 to an electrical angle (2k+1)π-σ1 of the induced voltage E. Further, the rectifier voltage Vpn is -Vcc in a period from the electrical angle (2k+1)π-σ1 to an electrical angle 2(k+1)π-σ1 of the induced voltage E. In this manner, the energization switching timing for the armature winding 24 of the single-phase alternating-current generator 2 by the FETs 31 to 34 is advanced. Thus, the generated power by the single-phase alternating-current generator 2 increases.

The retard angle control is the control that retards the phase in the conducting period (the ON period) of the FETs 31 to 34 with respect to the phase of the induced voltage E. Specifically, in the retard angle control, the phase at the switching time point between the conducting period and the non-conducting period of the FETs 31 to 34 is retarded by a retard angle amount σ2 with respect to the zero crossing point of the induced voltage E. Thus, as shown in Fig. 6(c), the rectifier voltage Vpn is +Vcc in a period from an electrical angle 2kπ+σ2 to an electrical angle (2k+1)π+σ2 of the induced voltage E. Further, the rectifier voltage Vpn is -Vcc in a period from the electrical angle (2k+1)π+σ2 to an electrical angle 2(k+1)π+σ2 of the induced voltage E. In this manner, the energization switching timing for the armature winding 24 of the single-phase alternating-current generator 2 by the FETs 31 to 34 is retarded. Thus, the generated power by the single-phase alternating-current generator 2 decreases.

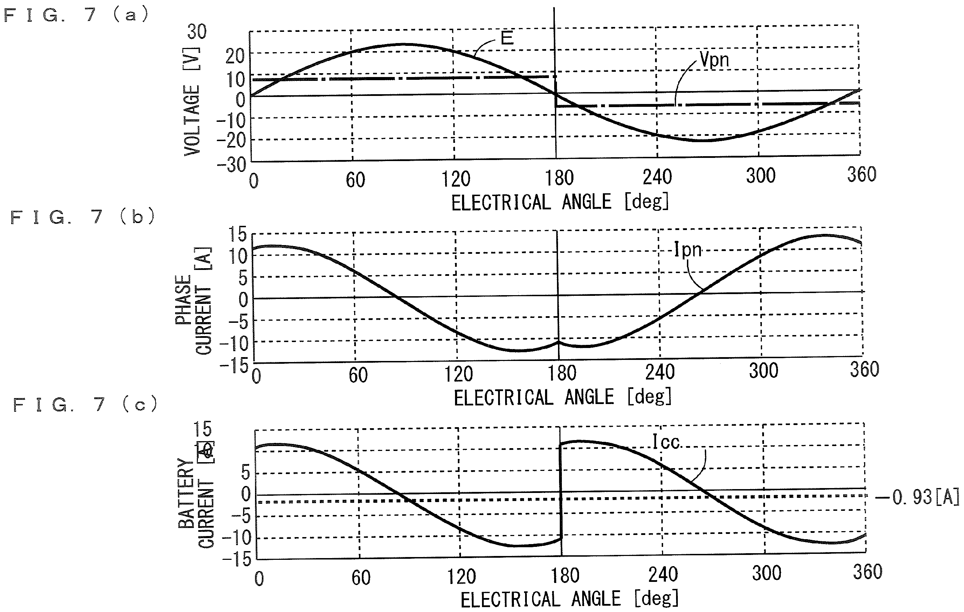

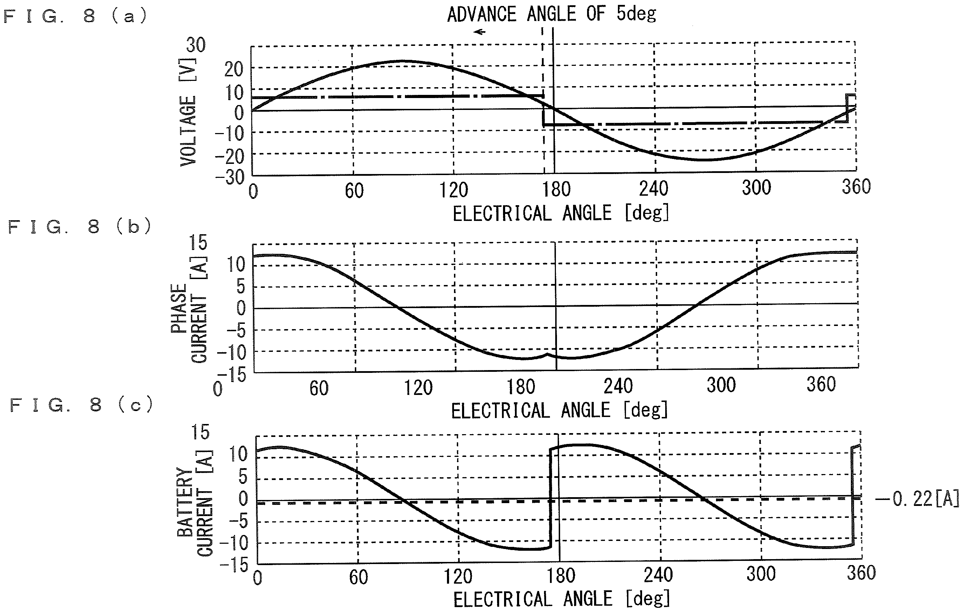

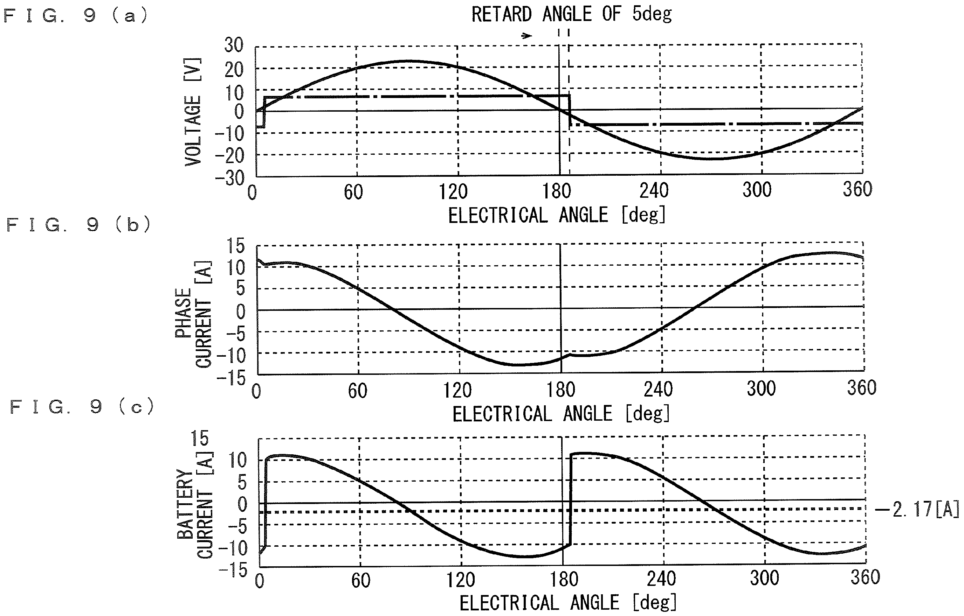

Figs. 7(a) to 9(c) are diagrams showing the simulation results of the generated current by the magnetic field control. Figs. 7(a) to 7(c) show a case of the no advance/retard angle control, Figs. 8(a) to 8(c) show a case of the advance angle control advanced by an advance angle amount of 5 degrees, and Figs. 9(a) to 9(c) show a case of the retard angle control retarded by a retard angle amount of 5 degrees.

In Figs. 7(a) to 9(c), each of Figs. 7(a), 8(a), 9(a) shows the induced voltage E of the single-phase alternating-current generator 2 by a solid line and shows the rectifier voltage Vpn of the rectifier 3 by a one-dot and dash line, each of Figs. 7(b), 8(b), 9(b) shows the phase current Ipn of the single-phase alternating-current generator 2, and each of Figs. 7(c), 8(c), 9(c) shows a battery current Icc. The battery current Icc is a current that flows from the battery 6 to the rectifier 3. In each of Figs. 7(c), 8(c), 9(c), an average value (a direct-current) of the battery current Icc is indicated by a dotted line. The rotation speed of the rotator 22 of the single-phase alternating-current generator 2 is 5000 rpm, and the battery voltage Vcc is constant.

In each of Figs. 7(c), 8(c), 9(c), the value of the battery current Icc that flows from the plus terminal of the battery 6 of Fig. 3 toward the node N1 of the rectifier 3 is positive. Therefore, an average value of the battery current Icc is negative during the power generation of the single-phase alternating-current generator 2, and an average value of the battery current Icc is positive during the power running of the single-phase alternating-current generating device 2.

As shown in Fig. 7(c), in the case of the no advance/retard angle control, the average value of the battery current Icc is - 0.93[A]. In this case, the current of 0.93[A] is supplied from the single-phase alternating-current generator 2 to the battery 6. As shown in Fig. 8(c), in the case of the advance angle control of 5 degrees, the generated power of the single-phase alternating-current generator 2 decreases, and the average value of the battery current Icc is -0.22[A]. In this case, the current of 0.22[A] is supplied from the single-phase alternating-current generator 2 to the battery 6. As shown in Fig. 9(c), in the case of the retard angle control of 5 degrees, the generated power of the single-phase alternating-current generator 2 increases, and the average value of the battery current Icc is -2.17[A]. In this case, the current of 2.17[A] is supplied from the single-phase alternating-current generator 2 to the battery 6.

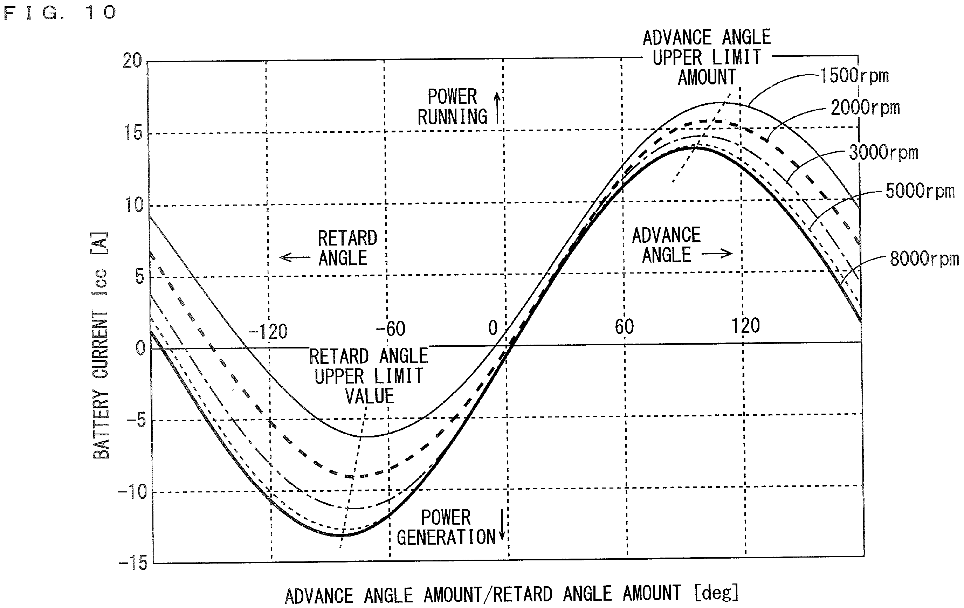

Fig. 10 is a diagram showing the simulation results of the battery current Icc obtained in a case in which the rotation speed of the rotator 22 of the single-phase alternating-current generator 2 is changed. In Fig. 10, the changes of the battery current Icc obtained in cases in which the rotation speeds of the rotator 22 are 1500 rpm, 2000 rpm, 3000 rpm, 5000 rpm and 8000 rpm are shown. The ordinate of Fig. 10 indicates the battery current Icc. The positive value of the abscissa is the advance angle amount, and an absolute value of the negative value is the retard angle amount. The battery voltage Vcc is constant.

The positive battery current Icc increases as the advance angle amount increases. If the advance angle amount further increases after the positive battery current Icc reaches a maximum, the positive battery current Icc decreases. The advance angle amount obtained when the positive battery current Icc is at a maximum is referred to as an advance angle upper limit value.

The absolute value of the negative battery current Icc increases as the retard angle amount increases. If the retard angle amount further increases after the absolute value of the negative battery current Icc reaches a maximum, the absolute value of the negative battery current Icc decreases. The retard angle amount obtained when the absolute value of the negative battery current Icc is at a maximum is referred to as a retard angle upper limit value.

As can be seen from Fig. 10, in a case in which the rotation speed of the rotator 22 is constant, the power supplied from the single-phase alternating-current generator 2 to the battery 6, or the power supplied from the battery 6 to the single-phase alternating-current generator 2 can be changed by changing the advance angle amount or the retard angle amount. Further, if the rotation speed of the rotator 22 varies, the magnitude of the battery current Icc varies, and the advance angle upper limit value and the retard angle upper limit value vary.

The relation between the rotation speed of the rotator 22 and the advance angle upper limit value is stored in the engine control device 4 as a rotation speed-advance angle upper limit value table. Further, the relation between the rotation speed of the rotator 22 and the retard angle upper limit value is stored in the engine control device 4 as the rotation speed-retard angle upper limit value table.

### (4) Power Generation Control Method in Power Generation Device 10

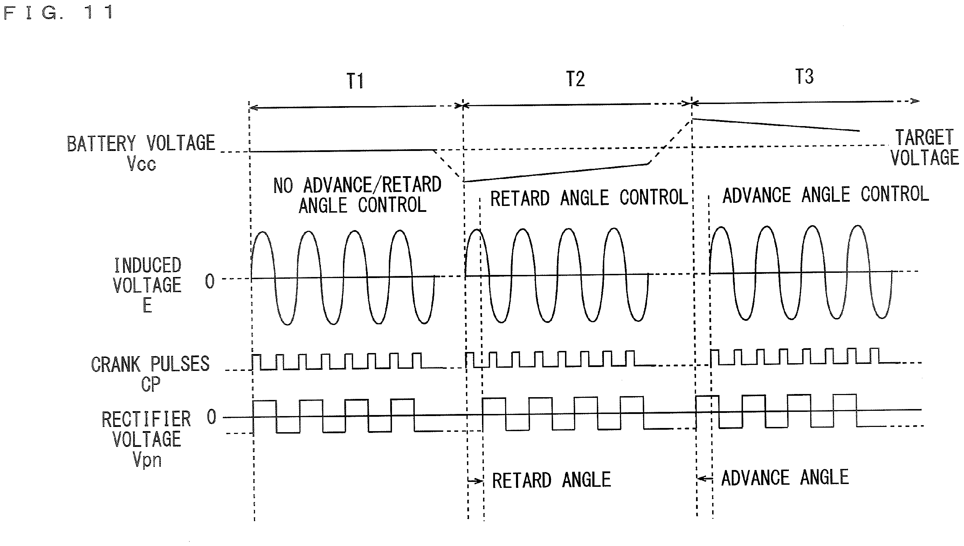

Fig. 11 is a waveform diagram for explaining the power generation control method in the power generation device 10 of Fig. 1. In Fig. 11, the battery voltage Vcc, the induced voltage E, the crank pulses CP and the rectifier voltage Vpn are shown. The abscissa of Fig. 11 indicates time.

The crank pulses CP rise at the zero crossing points at the times at which the induced voltage E changes from negative to positive, and from positive to negative. In the example of Fig. 11, the battery voltage Vcc is equal to a predetermined target voltage in a period T1. When the battery voltage Vcc is equal to the predetermined target voltage, the no advance/retard angle control is performed. In this case, the phase of the rectifier voltage Vpn is equal to a phase of the rising of each crank pulse CP.

In a period T2, when the battery voltage Vcc is lower than the target voltage, the retard angle control is performed. In this case, the phase of the rectifier voltage Vpn is retarded with respect to the rising of each crank pulse CP. Thus, the generated power of the single-phase alternating-current generator 2 increases, and the battery voltage Vcc increases.

In a period T3, when the battery voltage Vcc is higher than the target voltage, the advance angle control is performed. In this case, the phase of the rectifier voltage Vpn is advanced with respect to the rising of each crank pulse CP. Thus, the generated power of the single-phase alternating-current generator 2 decreases, and the battery voltage Vcc decreases.

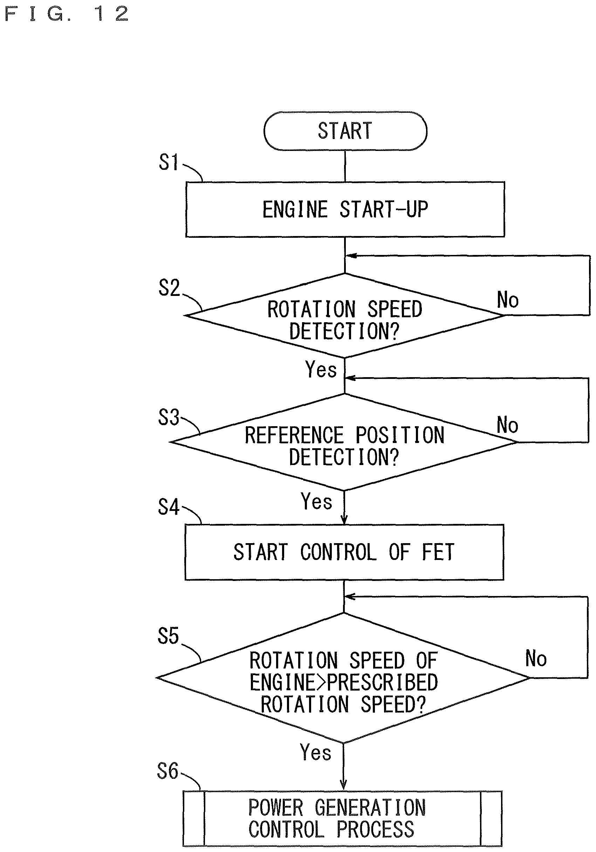

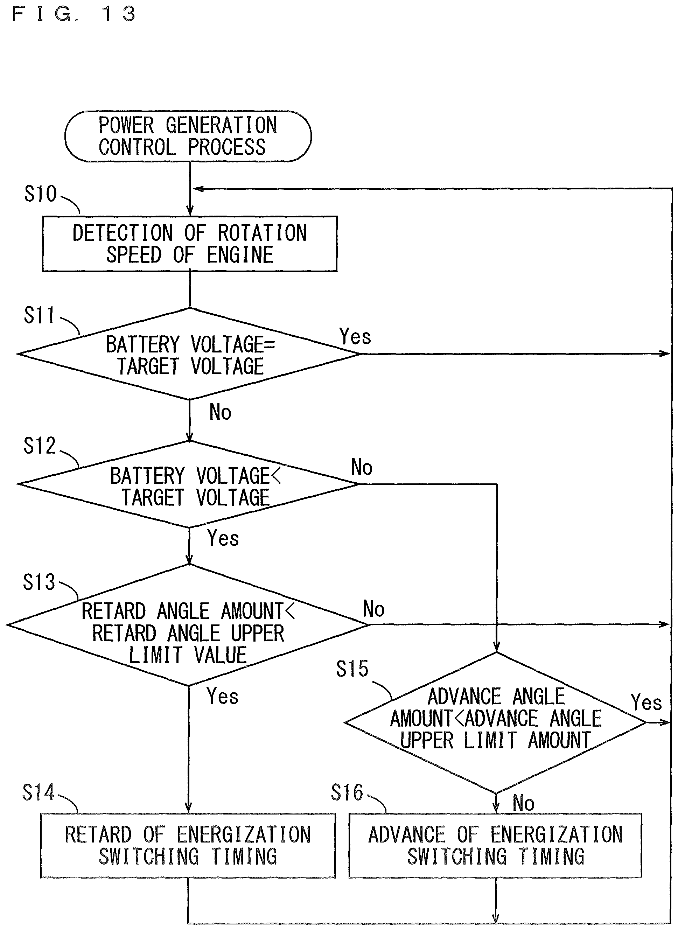

Fig. 12 is a flow chart showing the power generation control method in the power generation device 10 of Fig. 1. Fig. 13 is a flow chart showing a power generation control process of Fig. 12.

In Fig. 12, the starter motor 7 of Fig. 1 operates, so that the engine 1 is started (step S1). The CPU 41 of the engine control device 4 determines whether or not the rotation speed of the engine 1 is detected based on the crank pulse CP that is output from the crank angle sensor 5 (step S2). When the rotation speed of the engine 1 is detected, the CPU 41 determines whether or not the reference position of the crankshaft 11, that is, the reference position of the rotator 22 is detected (step S3).

When the reference position of the crankshaft 11 is detected, the CPU 41 starts the control of the FETs 31 to 34 of the rectifier 3 (step S4). Further, the CPU 41 determines whether or not the rotation speed of the engine 1 exceeds a prescribed rotation speed (step S5). When the rotation speed of the engine 1 is lower than the prescribed rotation speed, the CPU 41 waits. When the rotation speed of the engine 1 exceeds the prescribed rotation speed, the CPU 41 performs the power generation control process (step S6).

In Fig. 13, the CPU 41 detects the rotation speed of the engine 1 based on the crank pulses CP that are output from the crank angle sensor 5 (step S10). Further, the CPU 41 determines whether or not the battery voltage Vcc is equal to the target voltage (step S11). When the battery voltage Vcc is equal to the target voltage, the CPU 41 returns to the process of step S10. When the battery voltage Vcc is not equal to the target voltage, the CPU 41 determines whether or not the battery voltage Vcc is lower than the target voltage (step S12).

When the battery voltage Vcc is lower than the target voltage, the CPU 41 determines whether or not the current retard angle amount is smaller than the retard angle upper limit value (step S13). The retard angle upper limit value is obtained from the rotation speed-retard angle upper limit value table based on the rotation speed of the engine 1 (the rotation speed of the rotator 22). When the current retard angle amount is not less than the retard angle upper limit value, the CPU 41 returns to the process of step S10. When the current retard angle amount is smaller than the retard angle upper limit value, the CPU 41 retards the energization switching timing by a constant amount (step S14), and returns to the process of the step S10.

When the battery voltage Vcc is higher than the target voltage in step S12, the CPU 41 determines whether or not the current advance angle amount is smaller than the advance angle upper limit value (step S15). The advance angle upper limit value is obtained from the rotation speed-advance angle upper limit value table based on the rotation speed of the engine 1 (the rotation speed of the rotator 22). When the current advance angle amount is not less than the advance angle upper limit value, the CPU 41 returns to the process of step S10. When the current advance angle amount is smaller than the advance angle upper limit value, the CPU 41 advances the energization switching timing by a constant amount (step S16), and returns to the process of step S10.

In this manner, the battery voltage Vcc is controlled in a constant range (a target voltage range) including the target voltage in the center.

### (5) Designing Method of Single-Phase Alternating-Current Generator 2

Next, the designing method of the single-phase alternating-current generator 2 in the power generation device 10 according to the present embodiment will be described.

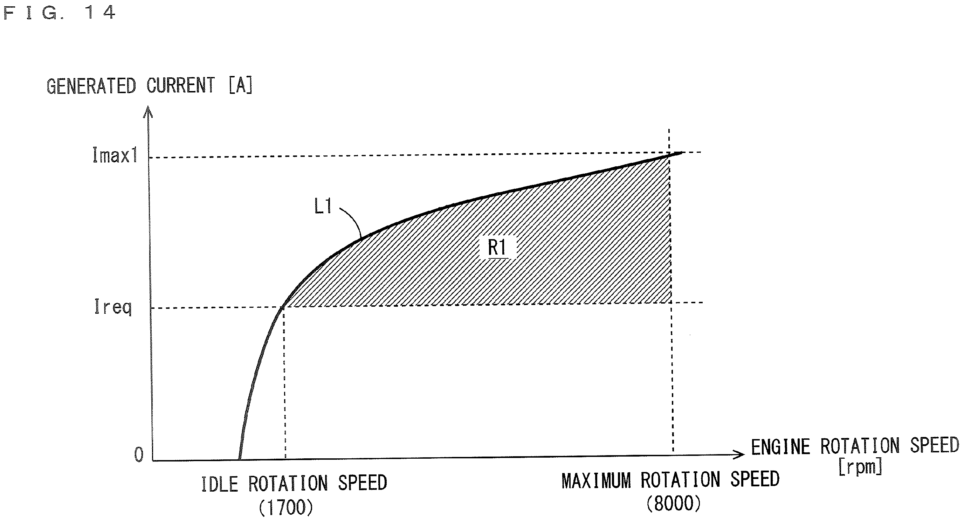

First, the designing method of an alternating-current generator of a comparative example will be described. The single-phase alternating-current generator is connected to a battery via a rectifier. Fig. 14 is a diagram showing the designing method of the single-phase alternating-current generator of the comparative example. The ordinate of Fig. 14 indicates a generated current, and the abscissa indicates the rotation speed of the engine. The generated current is a current that is supplied to the battery and other loads (electronic equipment provided at the motorcycle) through the rectifier from the single-phase alternating-current generator. The voltage of the battery is set to be constant.

The generated current required to supply a necessary amount of power for the battery and other loads is determined as a constant required current Ireq. The required current Ireq is a design value. The single-phase alternating-current generator is required to have power generating capacity to supply the required current Ireq in a range from an idle rotation speed (1700 rpm, for example) to the maximum rotation speed (8000 rpm, for example). When the rotation speed of the engine increases, the induced voltage generated in the single-phase alternating-current generator increases. Thus, the generated current increases as the rotation speed of the engine increases. Therefore, the single-phase alternating-current generator is designed such that the generated current equal to the required current Ireq is ensured at the idle rotation speed. The single-phase alternating-current generator designed in this manner has the power generating capacity shown by a characteristic L1. The single-phase alternating-current generator having the characteristic L1 can supply a maximum current Imax1 at the maximum rotation speed to the battery and the loads of a constant voltage.

However, the single-phase alternating-current generator according to the comparative example has the excessive power generating capacity in a region R1 in which the rotation speed of the engine is higher than the idle rotation speed. Thus, the excessive power is generated when the generated current equivalent to the required current Ireq is supplied to the battery 6 and other loads. If the excessive generated current that exceeds the required current Ireq flows in the battery, the battery may be overcharged. Therefore, during the actual running of the single-phase alternating-current generator, the armature winding is short-circuited in the rectifier, for example, so that the excessive generated current is prevented from being supplied to the battery. In this case, because the excessive power is returned to the single-phase alternating-current generator, a power loss due to a circulating current increases.

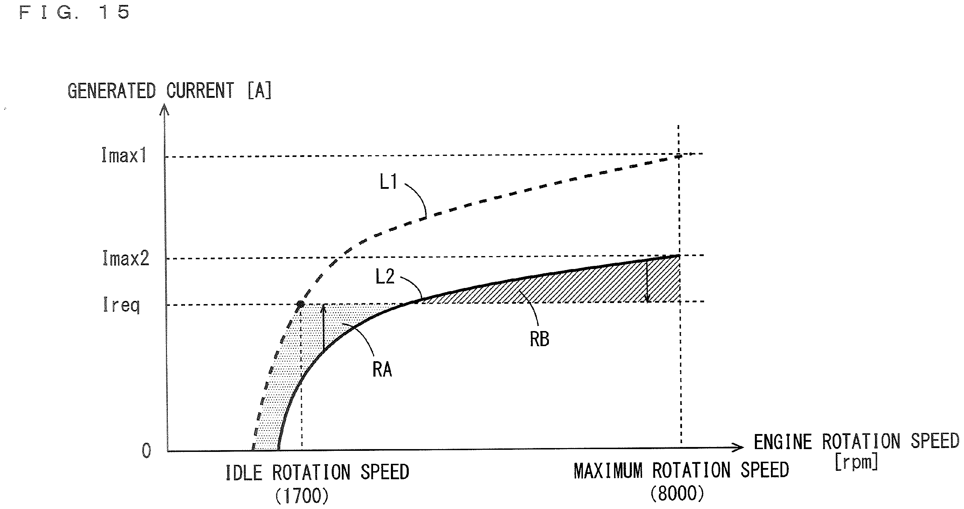

Next, the designing method of an alternating-current generator according to the present embodiment will be described. The single-phase alternating-current generator 2 is connected to the battery 6 through the rectifier 3. Fig. 15 is a diagram showing the designing method of the single-phase alternating-current generator 2 according to the present embodiment. The ordinate of Fig. 15 indicates the generated current, and the abscissa indicates the rotation speed of the engine.

In the designing method according to the present embodiment, the single-phase alternating-current generator 2 is designed such that the generated current equal to the required current Ireq is ensured at a rotation speed higher than the idle rotation speed. In this case, the generated current of the single-phase alternating-current generator 2 at the idle rotation speed is smaller than the required current Ireq. The single-phase alternating-current generator 2 according to the embodiment has the power generating capacity shown by the characteristic L2. The single-phase alternating-current generator 2 that has the characteristic L2 can supply the maximum current Imax2 at the maximum rotation speed to the battery and the loads of a constant voltage.

In the single-phase alternating-current generator 2 of the embodiment, a region RA in which the generated current is smaller than the required current Ireq, and a region RB in which the generated current is larger than the required current Ireq are generated. The power generating capacity of the single-phase alternating-current generator 2 is insufficient in the region RA, and the power generating capacity of the single-phase alternating-current generator 2 is excessive in the region RB. Thus, in a case in which the generated current equivalent to the required current Ireq is supplied, the power insufficiency occurs in the region RA, and the excessive power occurs in the region RB. The region RB in which the excessive power occurs in the single-phase alternating-current generator 2 of the embodiment is smaller than the region R1 in which the excessive power occurs in the single-phase alternating-current generator of the comparative example.

In the region RA, the power generation device 10 according to the embodiment enables the generated power to increase by the retard angle control as indicated by the upward arrow. Thus, the generated current equal to the required current Ireq can be ensured at the idle rotation speed. On the other hand, in the region RB, the generated power can be reduced by the advance angle control as indicated by the downward arrow. Thus, the power loss can be inhibited from increasing.

The maximum current Imax2 of the single-phase alternating-current generator according to the embodiment is smaller than the maximum current Imax1 of the single-phase alternating-current generator according to the comparative example. The size of the single-phase alternating-current generator 2 of the embodiment that has the characteristic L2 can be reduced as compared to the single-phase alternating-current generator of the comparative example that has the characteristic L1.

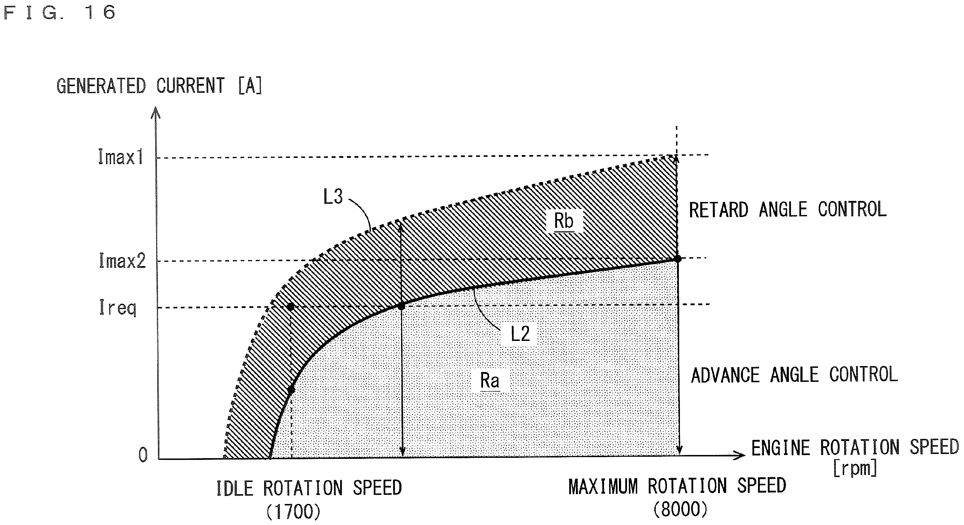

Fig. 16 is a diagram showing the power generation control method during the actual running of the power generation device 10 according to the present embodiment.

As described as above, the battery voltage Vcc fluctuates during the actual running of the power generation device 10. Therefore, in the present embodiment, the battery current Icc is controlled by the power generation control method using the magnetic field control such that the battery voltage Vcc is kept at the target voltage or in the target voltage range.

As shown in Fig. 16, the generated current (the generated power) can be reduced by the advance angle control as indicated by the downward arrow in the region Ra lower than the characteristic L2. On the other hand, the generated current (the generated power) can be increased by the retard angle control as indicated by the upward arrow in the region Rb higher than the characteristic L2. Therefore, the magnetic field control is performed in the regions Ra, Rb according to the change of the battery voltage Vcc, so that the battery voltage Vcc can be controlled.

As described above, because it is possible to control the generated power by performing the magnetic field control in the power generation device 10 according to the present embodiment, the single-phase alternating-current generator 2 can be designed to be small. Further, as shown in Fig. 1, because the starter motor 7 is separately provided from the single-phase alternating-current generator 2, it is not necessary to increase the size of the single-phase alternating-current generator 2 in order to ensure a starting torque in contrast to a starter generator type power generator. Therefore, the size of the power generation device 10 can be reduced.

### (6) Effects of Embodiment

The present embodiment enables the generated power that satisfies the required power to be generated by the retard angle control in the low-speed rotation region of the engine 1, and enables the generated power that largely exceeds the required power to be inhibited from being generated by the advance angle control in the high-speed rotation region of the engine 1. Therefore, the generated power that satisfies the required power can be efficiently obtained from the low-speed rotation region to the high-speed rotation region of the engine 1 by the small-sized single-phase alternating-current generator 2.

In this case, the retard angle control and the advance angle control can be performed based on the crank pulses CP that are output from the crank angle sensor 5 included in the engine 1. Thus, it is not necessary to separately provide an angle sensor for detecting the rotation angle of the rotator 22 at the single-phase alternating-current generator 2. Therefore, the structure of the power generation device 10 is not complicated, and the size and cost of the power generation device 10 can be reduced.

### (7) Other Embodiments

(a) While the rectifier 3 is constituted by the FETs 31 to 34 in the above-mentioned embodiment, the present invention is not limited to this. The rectifier 3 may be constituted by other bidirectional switching elements such as IGBTs (Insulated Gate Bipolar Transistors).
(b) While the energization switching timing is retarded by a constant amount in step S14, and the energization switching timing is advanced by a constant amount in step S16 in the power generation control process of Fig. 13, the present invention is not limited to this. For example, the retard angle amount in step S14 and the advance angle amount in step S16 may be set according to the rotation speed of the engine 1.
(c) While the starter motor 7 is provided at the motorcycle 100 according to the above-mentioned embodiment, a kick starter lever may be attached to the crankshaft 11 instead of the starter motor 7 or in addition to the starter motor 7. Even in this case, it is not necessary to increase the size of the single-phase alternating-current generator 2 in order to ensure the starting torque of the engine 1. Further, because the small-sized single-phase alternating-current director 2 is attached to the crankshaft 11, the starting torque of the engine 1 is reduced.
(d) While a case in which the power generation device 10 is provided at the motorcycle is explained in the above-mentioned embodiment, the power generation device 10 may be provided at another mobile object. Another mobile object may be another saddle-straddling type motor vehicle such as a motor tricycle, an ATV (All Terrain Vehicle), another vehicle such as an automobile, or a boat that includes an engine.

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the power generation device 10 is an example of a power generation device, the crank angle sensor 5, the projections 28 and the non-projection 29 are examples of a crank angle detector, the engine 1 is an example of an engine, the crankshaft 11 is an example of a crankshaft, the single-phase alternating-current generator 2 is an example of a single-phase alternating-current generator, the armature winding 24 is an example of an armature winding, the rectifier 3 is an example of a rectifier, the FETs 31 to 34 are examples of switching elements, the CPU 41 is an example of an energization controller and the crank pulses CP is an example of an output signal or a detection signal of the crank angle detector.

Further, the rotator 22 is an example of a rotator, the magnetic poles 27 is an example of a magnetic pole, the projections 28 is an example of projections, the non-projection 29 is an example of a non-projection and the crank angle sensor 5 is an example of a projection detector.

Further, the battery 6 is an example of a battery, the vehicle body 110 is an example of a main body, the engine control device 4 is an example of an engine control device, the starter motor 7 or the kick starter lever is an example of a starting device and the motorcycle 100 is an example of a mobile object.

As each of constituent elements recited in the claims, various other elements having configurations or functions described in the claims can be also used.

### INDUSTRIAL APPLICABILITY

The present invention can be effectively utilized for a power generation device that includes an engine.

## Claims

1. A power generation device driven by an engine (1) including a crank angle detector (5, 28, 29) for detecting a crank angle, comprising:
a single-phase alternating-current generator (2) provided to be driven by a rotation of a crankshaft (11) of the engine (1);
a rectifier (3) including a bridge connection of a plurality of switching elements (31-34) and configured to convert alternating-current power generated by the single-phase alternating-current generator (2) into direct-current power; and
an energization controller (41) configured to control energization switching timing for an armature winding (24) of the single-phase alternating-current generator (2) by the plurality of switching elements (31-34), wherein
the energization controller (41) is configured to control the direct-current power obtained by the rectifier (3) by performing a retard angle control and an advance angle control that respectively retard and advance the energization switching timing by the plurality of switching elements (31-34) with respect to a phase of an induced voltage of the single-phase alternating-current generator (2) based on an output signal of the crank angle detector (5, 28, 29),
**characterized in that**
an upper limit value of a retard angle amount in a case in which the direct-current power obtained by the rectifier (3) increases due to the retard angle control is set as a retard angle upper limit value, and an upper limit value of an advance angle amount in a case in which the direct-current power obtained by the rectifier (3) decreases due to the advance angle control is set as an advance angle upper limit value, and
the energization controller (41) is configured to perform the retard angle control such that the retard angle amount with respect to the phase of the induced voltage of the single-phase alternating-current generator (2) does not exceed the set retard angle upper limit value, and to perform the advance angle control such that the advance angle amount with respect to the phase of the induced voltage of the single-phase alternating-current generator (2) does not exceed the set advance angle upper limit value.

2. The power generation device according to claim 1, wherein
the single-phase alternating-current generator (2) includes
a rotator (22) rotated together with the crankshaft (11), and
a plurality of magnetic poles (27) arranged at the rotator (22) at equal angular intervals, wherein
the crank angle detector (5, 28, 29) is configured to produce a detection signal for each constant detection angle (θ2) as the output signal, and
a magnetic poles angle (θ1) between each two of the adjacent magnetic poles (27) is equal to the detection angle (θ2) of the crank angle detector (5, 28, 29), the magnetic poles angle (θ1) is a divisor of the detection angle (θ2) or the magnetic poles angle (θ1) is a multiple of the detection angle (θ2).

3. The power generation device according to claim 2, wherein
the rotator (22) has an outer peripheral surface and an inner peripheral surface,
the plurality of magnetic poles (27) are arranged on the inner peripheral surface of the rotator (22) at equal angular intervals,
the crank angle detector (5, 28, 29) includes
a plurality of projections (28) and a non-projection (29) that are arranged on the outer peripheral surface of the rotator (22) at equal angular intervals equivalent to the detection angle (θ2), and
a projection detector (5) configured to detect the plurality of projections (28), and
the projection detector (5) is configured to output the detection signal at a time of detecting each projection (28).

4. The power generation device according to claim 3, wherein
the plurality of projections (28) are arranged such that an angular position of one edge of each projection (28) in a rotation direction of the rotator (22) coincides with any one angular position of boundaries between the plurality of magnetic poles (27), and
the projection detector (5) is configured to output the detection signal at a time of detecting the one edge of each projection (28).

5. The power generation device according to any one of claims 1 to 4, wherein
the energization controller (41) is configured to perform the retard angle control and the advance angle control such that a direct-current voltage obtained by the rectifier (3) is kept at a predetermined target voltage or in a target voltage range.

6. The power generation device according to any one of claims 1 to 5, wherein
the energization controller (41) is configured to perform the retard angle control when the direct-current voltage obtained by the rectifier (3) is lower than the target voltage, and to perform the advance angle control when the direct-current voltage obtained by the rectifier (3) is higher than the target voltage.

7. The power generation device according to any one of claims 1 to 6, wherein
the retard angle upper limit value and the advance angle upper limit value are set in advance according to a rotation speed of the single-phase alternating-current generator (2), and
the energization controller (41) is configured to calculate the rotation speed of the single-phase alternating-current generator (2) based on the output signal of the crank angle detector (5, 28, 29), and to set the retard angle upper limit value and the advance angle upper limit value based on the calculated rotation speed.

8. The power generation device according to any one of claims 1 to 7, wherein
the single-phase alternating-current generator (2) is configured to be capable of generating predetermined required power by the retard angle control when a rotation speed of the engine (1) is an idle rotation speed.

9. The power generation device according to any one of claims 1 to 8, wherein
the rectifier (3) is connected to a battery (6), and the battery (6) is configured to be charged by the direct-current power obtained by the rectifier (3).

10. A mobile object comprising:
an engine (1);
a main body (110) that is moved by a torque generated by the engine (1);
a crank angle detector (5, 28, 29) that detects a crank angle of the engine (1);
an engine control device (4) that controls the engine (1) based on an output signal of the crank angle detector (5, 28, 29);
a starting device (7) that drives the crankshaft (11) in order to start the engine (1);
the power generation device according to any one of claims 1 to 9 that is driven by the engine (1); and
a battery (6) connected to the rectifier (3) of the power generation device, and configured to supply direct-current power to the engine control device.

11. A power generation control method that controls generated power by a power generation device driven by a crankshaft (11) of an engine (1), wherein
the power generation device includes a single-phase alternating-current generator (2) provided to be driven by a rotation of the crankshaft (11) of the engine (1), and a rectifier (3) including a bridge connection of a plurality of switching elements (31-34), and
the method includes the steps of
generating alternating-current power by the single-phase alternating-current generator (2),
converting the alternating-current power generated by the single-phase alternating-current generator (2) into direct-current power by the rectifier (3),
detecting a crank angle by a crank angle detector (5, 28, 29), and
controlling the direct-current power obtained by the rectifier (3) by performing retard angle control and advance angle control that respectively retard and advance energization switching timing for an armature winding (24) of the single-phase alternating-current generator (2) by the plurality of switching elements (31-34) with respect to a phase of an induced voltage of the single-phase alternating-current generator (2) based on an output signal of the crank angle detector (5, 28, 29),
**characterized in that**
an upper limit value of a retard angle amount in a case in which the direct-current power obtained by the rectifier (3) increases due to the retard angle control is set as a retard angle upper limit value, and an upper limit value of an advance angle amount in a case in which the direct-current power obtained by the rectifier (3) decreases due to the advance angle control is set as an advance angle upper limit value, and
the step of controlling includes performing the retard angle control such that the retard angle amount with respect to the phase of the induced voltage of the single-phase alternating-current generator (2) does not exceed the set retard angle upper limit value, and performing the advance angle control such that the advance angle amount with respect to the phase of the induced voltage of the single-phase alternating-current generator (2) does not exceed the set advance angle upper limit value.

## Patentansprüche

1. Eine Leistungserzeugungsvorrichtung, die durch einen Motor (1) angetrieben wird, der einen Kurbelwinkeldetektor (5, 28, 29) zum Erfassen eines Kurbelwinkels umfasst, die folgende Merkmale aufweist:
einen Einphasenwechselstromgenerator (2), der vorgesehen ist, um durch eine Drehung einer Kurbelwelle (11) des Motors (1) angetrieben zu werden;
einen Gleichrichter (3), der eine Brückenverbindung einer Mehrzahl von Schaltelementen (31-34) umfasst und konfiguriert ist, um Wechselstromleistung, die durch den Einphasenwechselstromgenerator (2) erzeugt wird, in Gleichstromleistung umzuwandeln; und
eine Erregungssteuerung (41), die konfiguriert ist, um eine Erregungsschaltzeitsteuerung für eine Ankerwicklung (24) des Einphasenwechselstromgenerators (2) durch die Mehrzahl von Schaltelementen (31-34) zu steuern, wobei
die Erregungssteuerung (41) konfiguriert ist, um die Gleichstromleistung, die durch den Gleichrichter (3) erhalten wird, zu steuern durch Durchführen einer Verzögerungswinkelsteuerung und einer Beschleunigungswinkelsteuerung, die jeweils die Erregungsschaltzeitsteuerung durch die Mehrzahl von Schaltelementen (31-34) verzögern und beschleunigen bezüglich einer Phase einer induzierten Spannung des Einphasenwechselstromgenerators (2) basierend auf einem Ausgangssignal des Kurbelwinkeldetektors (5, 28, 29),
**dadurch gekennzeichnet, dass**
ein oberer Grenzwert eines Verzögerungswinkelbetrags in einem Fall, bei dem sich die Gleichstromleistung, die durch den Gleichrichter (3) erhalten wird, aufgrund der Verzögerungswinkeisteuerung erhöht, als ein oberer Verzögerungswinkelgrenzwert eingestellt ist, und ein oberer Grenzwert eines Beschleunigungswinkelbetrags in einem Fall, bei dem sich die Gleichstromleistung, die durch den Gleichrichter (3) erhalten wird, aufgrund der Beschleunigungswinkelsteuerung verringern, als ein oberer Beschleunigungsgrenzwert eingestellt ist, und
die Erregungssteuerung (41) konfiguriert ist, um die Verzögerungswinkelsteuerung durchzuführen, so dass der Verzögerungswinkelbetrag bezüglich der Phase der induzierten Spannung des Einphasenwechselstromgenerators (2) den eingestellten oberen Verzögerungswinkelgrenzwert nicht überschreitet, und um die Beschleunigungswinkelsteuerung durchzuführen, so dass der Beschleunigungswinkelbetrag bezüglich der Phase der induzierten Spannung des Einphasenwechselstromgenerators (2) den eingestellten oberen Beschleunigungswinkelgrenzwert nicht überschreitet.

2. Die Leistungserzeugungsvorrichtung gemäß Anspruch 1, bei der
der Einphasenwechselstromgenerator (2) folgende Merkmale umfasst:
einen Rotator (22), der sich zusammen mit der Kurbelwelle (11) dreht, und
eine Mehrzahl von Magnetpolen (27), die mit gleichen Winkelabständen an dem Rotator (22) angeordnet ist, wobei
der Kurbelwinkeldetektor (5, 28, 29) konfiguriert ist, um für jeden konstanten Erfassungswinkel (θ2) ein Erfassungssignal als das Ausgangssignal zu erzeugen, und
ein Magnetpolwinkel (θ1) zwischen jeweils zwei der benachbarten Magnetpole (27) gleich dem Erfassungswinkel (θ2) des Kurbelwinkeldetektors (5, 28, 29) ist, wobei der Magnetpolwinkel (θ1) ein Divisor des Erfassungswinkels (θ2) ist oder der Magnetpolwinkel (θ1) ein Mehrfaches des Erfassungswinkels (θ2) ist.

3. Die Leistungserzeugungsvorrichtung gemäß Anspruch 2, bei der
der Rotator (22) eine Außenumfangsoberfläche und eine Innenumfangsoberfläche aufweist,
die Mehrzahl von Magnetpole (27) mit gleichen Winkelabständen auf der Innenumfangsoberfläche des Rotators (22) angeordnet ist,
der Kurbelwinkeldetektor (5, 28, 29) folgende Merkmale umfasst:
eine Mehrzahl von Vorsprüngen (28) und einen Nicht-Vorsprung (29), die auf der Außenumfangsoberfläche des Rotators (22) mit gleichen Winkelabständen äquivalent zu dem Erfassungswinkel (θ2) angeordnet sind, und
einen Vorsprungsdetektor (5), der konfiguriert ist, um die Mehrzahl von Vorsprüngen (28) zu erfassen, und
der Vorsprungsdetektor (5) konfiguriert ist, um das Erfassungssignal zu einem Zeitpunkt der Erfassung jedes Vorsprungs (28) auszugeben.

4. Die Leistungserzeugungsvorrichtung gemäß Anspruch 3, bei der
die Mehrzahl von Vorsprüngen (28) angeordnet ist, so dass eine Winkelposition eines Rands jedes Vorsprungs (28) in einer Drehrichtung des Rotators (22) zusammenfällt mit jeder Winkelposition von Grenzen zwischen der Mehrzahl von Magnetpolen (27), und
der Vorsprungsdetektor (5) konfiguriert ist, um das Erfassungssignal zu einem Zeitpunkt einer Erfassung des einen Rands jedes Vorsprungs (28) auszugeben.

5. Die Leistungserzeugungsvorrichtung gemäß einem der Ansprüche 1 bis 4, bei der
die Erregungssteuerung (41) konfiguriert ist, um die Verzögerungswinkelsteuerung und die Beschleunigungswinkelsteuerung durchzuführen, so dass eine Gleichspannung, die durch den Gleichrichter (3) erhalten wird, bei einer vorbestimmten Zielspannung oder innerhalb eines Zielspannungsbereichs beibehalten wird.

6. Die Leistungserzeugungsvorrichtung gemäß einem der Ansprüche 1 bis 5, bei der
die Erregungssteuerung (41) konfiguriert ist, um die Verzögerungswinkelsteuerung durchzuführen, wenn die Gleichspannung, die durch den Gleichrichter (3) erhalten wird, niedriger ist als die Zielspannung, und um die Beschleunigungswinkelsteuerung durchzuführen, wenn die Gleichspannung, die durch den Gleichrichter (3) erhalten wird, höher ist als die Zielspannung.

7. Die Leistungserzeugungsvorrichtung gemäß einem der Ansprüche 1 bis 6, bei der
der obere Verzögerungswinkelgrenzwert und der obere Beschleunigungswinkelgrenzwert im Voraus eingestellt werden gemäß einer Drehgeschwindigkeit des Einphasenwechselstromgenerators (2), und
die Erregungssteuerung (41) konfiguriert ist, um die Drehgeschwindigkeit des Einphasenwechselstromgenerators (2) basierend auf dem Ausgangssignal des Kurbelwinkeldetektors (5, 28, 29) zu berechnen, und um den oberen Verzögerungswinkelgrenzwert und den oberen Beschleunigungswinkelgrenzwert basierend auf der berechneten Drehgeschwindigkeit einzustellen.

8. Die Leistungserzeugungsvorrichtung gemäß einem der Ansprüche 1 bis 7, bei der
der Einphasenwechselstromgenerator (2) konfiguriert ist, um eine vorbestimmte erforderliche Leistung durch die Verzögerungswinkelsteuerung erzeugen zu können, wenn eine Drehgeschwindigkeit des Motors (1) eine Leerlaufdrehgeschwindigkeit ist.

9. Die Leistungserzeugungsvorrichtung gemäß einem der Ansprüche 1 bis 8, bei der
der Gleichrichter (3) mit einer Batterie (6) verbunden ist, und die Batterie (6) konfiguriert ist, um durch die Gleichstromleistung, die durch den Gleichrichter (3) erhalten wird, geladen zu werden.

10. Ein mobiles Objekt, das folgende Merkmale aufweist:
einen Motor (1);
einen Hauptkörper (110), der durch ein Drehmoment bewegt wird, das durch den Motor (1) erzeugt wird;
einen Kurbelwinkeldetektor (5, 28, 29), der einen Kurbelwinkel des Motors (1) erfasst;
eine Motorsteuervorrichtung (4), die den Motor (1) basierend auf einem Ausgangssignal des Kurbelwinkeldetektors (5, 28, 29) steuert;
eine Startvorrichtung (7), die die Kurbelwelle (11) antreibt, um den Motor (1) zu starten;
die Leistungserzeugungsvorrichtung gemäß einem der Ansprüche 1 bis 9, die durch den Motor (1) angetrieben wird; und
eine Batterie (6), die mit dem Gleichrichter (3) der Leistungserzeugungsvorrichtung verbunden ist und konfiguriert ist, um Gleichstromleistung zu der Motorsteuervorrichtung zuzuführen.

11. Ein Leistungserzeugungssteuerverfahren, das Leistung steuert, die durch eine Leistungserzeugungsvorrichtung erzeugt wird, die durch eine Kurbelwelle (11) eines Motors (1) angetrieben wird, wobei
die Leistungserzeugungsvorrichtung einen Einphasenwechselstromgenerator (2) umfasst, der vorgesehen ist, um durch eine Drehung der Kurbelwelle (11) des Motors (1) angetrieben zu werden, und einen Gleichrichter (3), der eine Brückenverbindung einer Mehrzahl von Schaltelementen (31, 34) umfasst, und
wobei das Verfahren folgende Schritte umfasst:
Erzeugen von Wechselstromleistung durch den Einphasenwechselstromgenerator (2),
Umwandeln der Wechselstromleistung, die durch den Einphasenwechselstromgenerator (2) erzeugt wird, in Gleichstromleistung durch den Gleichrichter (3),
Erfassen eines Kurbelwinkels durch einen Kurbelwinkeldetektor (5, 28, 29), und
Steuern der Gleichstromleistung, die durch den Gleichrichter (3) erhalten wird, durch Durchführen einer Verzögerungswinkelsteuerung und Beschleunigungswinkelsteuerung, die jeweils eine Erregungsschaltzeitsteuerung für eine Ankerwicklung (24) des Einphasenwechselstromgenerators (2) durch die Mehrzahl von Schaltelementen (31, 34) verzögern und beschleunigen bezüglich einer Phase einer induzierten Spannung des Einphasenwechselstromgenerators (2) basierend auf einem Ausgangssignal des Kurbelwinkeldetektors (5, 28, 29),
**dadurch gekennzeichnet, dass**
ein oberer Grenzwert eines Verzögerungswinkelbetrags in einem Fall, bei dem sich die Gleichstromleistung, die durch den Gleichrichter (3) erhalten wird, aufgrund der Verzögerungswinkelsteuerung erhöht, als ein oberer Verzögerungswinkelgrenzwert eingestellt ist, und ein oberer Grenzwert eines Beschleunigungswinkelbetrags in einem Fall, bei dem sich die Gleichstromleistung, die durch den Gleichrichter (3) erhalten wird, aufgrund der Beschleunigungswinkelsteuerung verringert, als ein oberer Beschleunigungswinkelgrenzwert eingestellt ist, und
der Schritt des Steuerns das Durchführen der Verzögerungswinkelsteuerung, so dass der Verzögerungswinkelbetrag bezüglich der Phase der induzierten Spannung des Einphasenwechselstromgenerators (2) den eingestellten oberen Verzögerungswinkelgrenzwert nicht überschreitet, und das Durchführen der Beschleunigungswinkelsteuerung umfasst, so dass der Beschleunigungswinkelbetrag bezüglich der Phase der induzierten Spannung des Einphasenwechselstromgenerators (2) den eingestellten oberen Beschleunigungswinkelgrenzwert nicht überschreitet.

## Revendications

1. Dispositif de génération d'énergie entraîné par un moteur (1), comportant un détecteur d'angle de vilebrequin (5, 28, 29) destiné à détecter un angle de vilebrequin, comprenant:
un générateur de courant alternatif monophasé (2) prévu pour être entraîné par une rotation d'un vilebrequin (11) du moteur (1);
un redresseur (3) comportant une connexion à pont d'une pluralité d'éléments de commutation (31 à 34) et configuré pour convertir l'énergie de courant alternatif générée par le générateur de courant alternatif monophasé (2) en énergie de courant continu; et
un moyen de commande d'excitation (41) configuré pour commander la synchronisation de commutation d'excitation pour un bobinage d'induit (24) du générateur de courant alternatif monophasé (2) par la pluralité d'éléments de commutation (31 à 34), dans lequel
le moyen de commande d'excitation (41) est configuré pour commander l'énergie de courant continu obtenue par le redresseur (3) en effectuant une commande d'angle de retard et une commande d'angle d'avance qui retardent et avancent respectivement la synchronisation de commutation d'excitation par la pluralité d'éléments de commutation (31 à 34) par rapport à une phase d'une tension induite du générateur de courant alternatif monophasé (2) sur base d'un signal de sortie du détecteur d'angle de vilebrequin (5, 28, 29),
**caractérisé par le fait que**
une valeur limite supérieure d'une quantité d'angle de retard dans un cas où l'énergie de courant continu obtenue par le redresseur (3) augmente du fait de la commande d'angle de retard est réglée comme une valeur limite supérieure d'angle de retard, et une valeur limite supérieure d'une quantité d'angle d'avance dans un cas où l'énergie de courant continu obtenue par le redresseur (3) diminue du fait de la commande d'angle d'avance est réglée comme une voleur limite supérieure d'angle d'avance, et
le moyen de commande d'excitation (41) est configuré pour effectuer la commande d'angle de retard de sorte que la quantité d'angle de retard par rapport à la phase de la tension induite du générateur de courant alternatif monophasé (2) n'excède pas la valeur limite supérieure d'angle de retard réglée, et pour effectuer la commande d'angle d'avance de sorte que la quantité d'angle d'avance par rapport à la phase de la tension induite du générateur de courant alternatif monophasé (2) n'excède pas la valeur limite supérieure d'angle d'avance réglée.

2. Dispositif de génération d'énergie selon la revendication 1, dans lequel
le générateur de courant alternatif monophasé (2) comporte un rotateur (22) qui tourne ensemble avec le vilebrequin (11), et une pluralité de pôles magnétiques (27) disposés sur le rotor (22) à des intervalles angulaires identiques, dans lequel
le détecteur d'angle de vilebrequin (5, 28, 29) est configuré pour produire un signal de détection pour chaque angle de détection constant (θ2) comme signal de sortie, et
un angle de pôles magnétiques (θ1) entre chaque fois deux pôles magnétiques adjacents (27) est égal à l'angle de détection (θ2) du détecteur d'angle de vilebrequin (5, 28, 29), l'angle de pôles magnétiques (θ1) est un diviseur de l'angle de détection (θ2) ou l'angle de pôles magnétiques (θ1) est un multiple de l'angle de détection (θ2).

3. Dispositif de génération d'énergie selon la revendication 2, dans lequel
le rotateur (22) présente une surface périphérique extérieure et une surface périphérique intérieure,
la pluralité de pôles magnétiques (27) sont disposés sur la surface périphérique intérieure du rotateur (22) à des intervalles angulaires identiques,
le détecteur d'angle de vilebrequin (5, 28, 29) comporte
une pluralité de saillies (28) et une non-saillie (29) qui sont disposées sur la surface périphérique extérieure du rotateur (22) à des intervalles angulaires identiques équivalentes à l'angle de détection (θ2), et
un détecteur de saillies (5) configuré pour détecter la pluralité de saillies (28), et
le détecteur de saillies (5) est configure pour sortir le signal de détection au moment de la détection de chaque saillie (28).

4. Dispositif de génération d'énergie selon la revendication 3, dans lequel
la pluralité de saillies (28) sont disposées de sorte qu'une position angulaire d'un bord de chaque saillie (28) dans une direction de rotation du rotateur (22) coïncide avec une position angulaire quelconque de limites entre la pluralité de pôles magnétiques (27), et
le détecteur de saillies (5) est configuré pour sortir le signal de détection au moment de la détection de l'un bord de chaque saillie (28).

5. Dispositif de génération d'énergie selon l'une quelconque des revendications 1 à 4, dans lequel
le moyen de commande d'excitation (41) est configuré pour effectuer la commande d'angle de retard et la commande d'angle d'avance de sorte qu'une tension de courant continu obtenue par le redresseur (3) soit maintenue à une tension cible prédéterminée ou dans une plage de tensions cibles.

6. Dispositif de génération d'énergie selon l'une quelconque des revendications 1 à 5, dans lequel
le moyen de commande d'excitation (41) est configuré pour effectuer la commande d'angle de retard lorsque la tension de courant continu obtenue par le redresseur (3) est inférieure à la tension cible, et pour effectuer la commande d'angle d'avance lorsque la tension de courant continu obtenue par le redresseur (3) est supérieure à la tension cible.

7. Dispositif de génération d'énergie selon l'une quelconque des revendications 1 à 6, dans lequel
la valeur limite supérieure d'angle de retard et la valeur limite supérieure d'angle d'avance sont réglées d'avance selon une vitesse de rotation du générateur de courant alternatif monophasé (2), et
le moyen de commande d'excitation (41) est configuré pour calculer la vitesse de rotation du générateur de courant alternatif monophasé (2) sur base du signal de sortie du détecteur d'angle de vilebrequin (5, 28, 29) et pour régler la valeur limite supérieure d'angle de retard et la valeur limite supérieure d'angle d'avance sur base de la vitesse de rotation calculée.

8. Dispositif de génération d'énergie selon l'une quelconque des revendications 1 à 7, dans lequel
le générateur de courant alternatif monophasé (2) est configuré pour pouvoir générer l'énergie requise prédéterminée par la commande d'angle de retard lorsqu'une vitesse de rotation du moteur (1) est une vitesse de rotation de ralenti.

9. Dispositif de génération d'énergie selon l'une quelconque des revendications 1 à 8, dans lequel
le redresseur (3) est connecté à une batterie (6) et la batterie (6) est configurée pour être chargée par l'énergie de courant continu obtenue par le redresseur (3).

10. Objet mobile, comprenant:
un moteur (1);
un corps principal (110) qui est déplacé par un couple généré par le moteur (1);
un détecteur d'angle de vilebrequin (5, 28, 29) qui détecte un angle de vilebrequin du moteur (1);
un dispositif de commande de moteur (4) qui commande le moteur (1) sur base d'un signal de sortie du détecteur d'angle de vilebrequin (5, 28, 29);
un dispositif de démarrage (7) qui entraîne le vilebrequin (11) pour faire démarrer le moteur (1);
le dispositif de génération d'énergie selon l'une quelconque des revendications 1 à 9 qui est entraîné par le moteur (1); et
une batterie (6) connectée au redresseur (3) du dispositif de génération d'énergie et configurée pour alimenter une énergie de courant continu vers le dispositif de commande du moteur.

11. Procédé de commande de génération d'énergie qui commande l'énergie générée par un dispositif de génération d'énergie entraîné par un vilebrequin (11) d'un moteur (1), dans lequel
le dispositif de génération d'énergie comporte un générateur de courant alternatif monophasé (2) prévu pour être entraîne par une rotation du vilebrequin (11) du moteur (1), et un redresseur (3) comportant une connexion à pont d'une pluralité d'éléments de commutation (31 à 34), et
le procédé comporte les étapes consistant à
générer une énergie de courant alternatif par le générateur de courant alternatif monophasé (2),
convertir l'énergie de courant alternatif générée par le générateur de courant alternatif monophasé (2) en courant continu par le redresseur (3),
détecter un angle de vilebrequin par un détecteur d'angle de vilebrequin (5, 28, 29), et
commander l'énergie de courant continu obtenue par le redresseur (3) en effectuant une commande d'angle de retard et une commande d'angle d'avance qui retardent et avancent respectivement la synchronisation de commutation d'excitation pour un bobinage d'induit (24) du générateur de courant alternatif monophasé (2) par la pluralité d'éléments de commutation (31 à 34) par rapport à une phase d'une tension induite du générateur de courant alternatif monophasé (2) sur base d'un signal de sortie du détecteur d'angle de vilebrequin (5, 28, 29),
**caractérisé par le fait que**
une valeur limite supérieure d'une quantité d'angle de retard dans un cas où l'énergie de courant continu obtenue par le redresseur (3) augmente du fait de la commande d'angle de retard est réglée comme une valeur limite supérieure d'angle de retard, et une valeur limite supérieure d'une quantité d'angle d'avance dans un cas où l'énergie de courant continu obtenue par le redresseur (3) diminue du fait de la commande d'angle d'avance comprend est réglée comme une valeur limite supérieure d'angle d'avance, et
l'étape de commande comporte le fait d'effectuer la commande d'angle de retard de sorte que la quantité d'angle de retard par rapport à la phase de la tension induite du générateur de courant alternatif monophasé (2) n'excède pas la valeur limite supérieure d'angle de retard réglée, et pour effectuer la commande d'angle d'avance de sorte que la quantité d'angle d'avance par rapport à la phase de la tension induite du générateur de courant alternatif monophasé (2) n'excède pas la valeur limite supérieure d'angle d'avance réglée.
